# EUROPEAN PATENT APPLICATION

(11) **EP 1 990 715 A1**
(43) Date of publication of application: **12.11.2008**
(21) Application number: 08155769.6
(22) Date of filing: 07.05.2008
(51) Int. Cl.: G06F 9/44

(54) **System, apparatus and method for programming a computing device**

(30) Priority: 07.05.2007 US 916402 P
(71) Applicant: Nextair Corporation, Waterloo, ON N2L 3W8 (CA)
(72) Inventor: Neil, Tim, Mississauga Ontario L5M 7H2 (CA); Grenier, Steve, Georgetown Ontario L7G 5V7 (CA)
(74) Representative: Rees, Alexander Ellison

(57) **Abstract**

Methods and apparatus for developing software for a computing device are provided. One method includes accessing input received from an input peripheral, accessing a definition file defining a plurality of tools for code development, providing a development assistance tool on an output peripheral based on conditions and instructions in the definition file that match the input. Another method includes receiving an engine definition file corresponding to a development assistance engine incorporated into the IDE, editing the engine definition file to include programming tools that correspond with the a computer language that is native to the computing device, and saving the edited engine define file for subsequent use by the I DE.

## Description

### RELATED APPLICATIONS

This patent specification claims the benefit of U.S. Provisional Application No. 60/916, 402, filed May 7, 2007.

### COPYRIGHT NOTICE

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyright rights whatsoever.

### FIELD

The present disclosure relates to apparatuses and methods for programming a computing device.

### BACKGROUND

Programming languages are increasing in complexity and functionality. The broad range of available computing devices, including desktop computers, laptop computers, personal digital assistants, cellular telephones, wireless email paging devices continuously spurs the need for even more sophisticated programming languages in order to utilize the functionality of those computing environments.

An integrated development environment (IDE), also known as an integrated design environment and an integrated debugging environment, can be helpful for computer programmers who are developing software for different computing devices. IDEs can simplify the task of programmers so that they need not understand all of the peculiar details of every computing device for which they are tasked with programming. An example of a known IDE is JSEclipse from Adobe Systems Romania, formerly known as InterAKT Bdul. Vasile Milea, nr 2H, et 1, ZIP 061344, Bucharest, Romania, based on Eclipse from the Eclipse Foundation, Inc. 102 Centrepointe Drive, Ottawa, Ontario, Canada, K2G 6B1. Another example is Microsoft Visual Studio from Microsoft Corporation of 205 108th Ave. NE, Suite 400, Bellevue, WA 98004. There are challenges associated with these IDEs.

### SUMMARY

An aspect of the disclosure provides an apparatus for programming a computing device including at least one central processing unit, a volatile storage unit and non-volatile storage unit interconnected by a bus. The apparatus may also include an input peripheral for receiving input from a user and connected to the at least one central processing unit. The apparatus may also include an output peripheral for generating output for presentation to a user and connected to the at least one central processing unit. The at least one processing unit is configured to execute a plurality of programming instructions implementing a source code editor coupled with a code development engine. The programming instructions further include an engine definition file readable by the code development engine. The engine definition file defines a plurality of tools for code development within the source code editor that correspond to a programming language used for developing software for the computing device.

The programming instructions can be implemented as part of an integrated development environment.

The tools can include a code completion tool. The tools can include a code correction tool. The tools can include a context-sensitive help tool.

The engine definition file can be based on the extended Markup Language ("XML"), or any other type of editable text file.

The programming language can be Java and the engine definition file can thus include Java development tools.

Another aspect of the disclosure provides a method of developing software for a computing device. The method may use an apparatus for programming a computing device. The apparatus includes at least one central processing unit, a volatile storage unit and non-volatile storage unit interconnected by a bus. The apparatus may also include an input peripheral for receiving input from a user and connected to the at least one central processing unit. The apparatus may also include an output peripheral for generating output for presentation to a user and connected to the at least one central processing unit. The method includes:
accessing input received from an input peripheral;
accessing a definition file defining a plurality of tools for code development;
providing a development assistance tool on an output peripheral based on
conditions and instructions in the definition file that match the input.

The input can be received via an editor.

The accessing can be performed by a development assistant engine.

The tool can be a code completion tool, a code correction tool, a context-sensitive help tool, or any other type tool.

The engine definition file can be based on the extended Markup Language. ("XML")

The programming language can be Java and the engine definition file can include Java development tools.

Another aspect of the disclosure provides a method of modifying an integrated development engine (IDE). The method may use an apparatus for programming a computing device using the IDE. The method includes:
receiving an engine definition file corresponding to a development assistance engine incorporated into the IDE;
editing the engine definition file to include programming tools that correspond with the a computer language that is native to the computing device;
saving the edited engine define file for subsequent use by the IDE.

The tool can be a code completion tool, a code correction tool, a context-sensitive help tool.

The engine definition file is based on the extended Markup Language. ("XML")

The programming language can be Java and the engine definition file can include Java development tools.

Another aspect of this disclosure provides a computer readable medium storing a plurality of programming instructions that can implement any of the foregoing methods.

### BRIEF DESCRIPTION OF THE DRAWINGS

Figure 1 shows a system for programming a computing device.

Figure 2 is a graphic representation of the IDE from Figure 1.

Figure 3 is a flowchart depicting a method for programming a computing device, according to an example embodiment.

Figure 4 is a consolidation of Figures 1 and 2.

Figure 5 is a flowchart depicting a method of updating an IDE, according to an example embodiment.

Figure 6 shows a modification of the system of Figure 4, modified using the method in Figure 5.

Figure 7 shows a system for programming a computing device in accordance with another example embodiment.

Figure 8 shows an example performance of the system of Figure 7.

### DETAILED DESCRIPTION OF THE EXAMPLE EMBODIMENTS

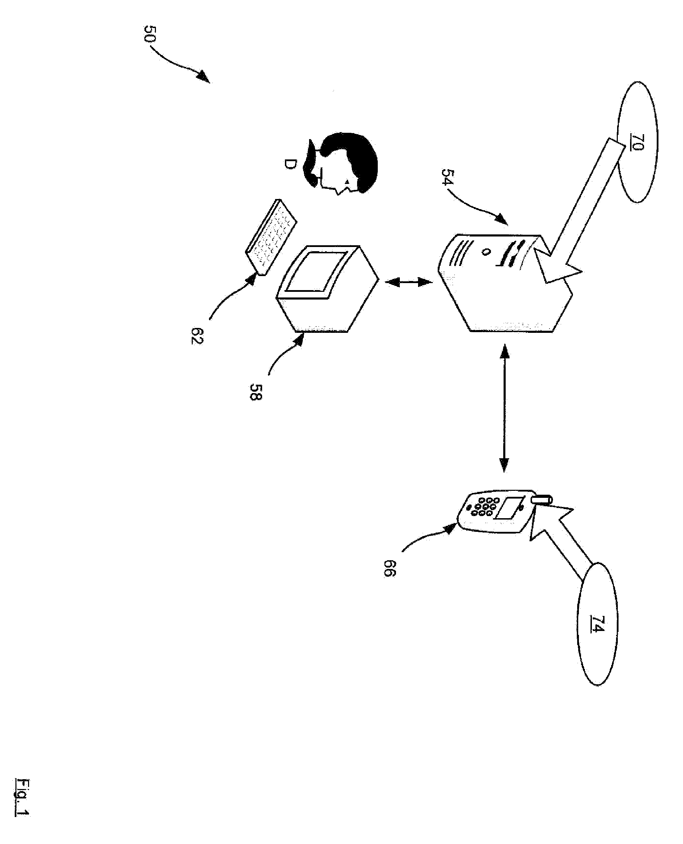

Referring now to Figure 1, a system for programming a computing device is indicated generally at 50. System 50 includes a tower 54 coupled to a display 58, a keyboard 62 and a computing device 66. An IDE 70 executes on tower 54. A developer D using display 58 and keyboard 62 can interact with an IDE executing tower 54 in order to develop software 74 for execution on device 66, particularly for use when device 66 is disconnected from tower 54. As will become more apparent from the discussion further below, the term "develop" is used in a non-limiting sense, to refer to any exercise related to the creation and/or modification and/or the like of software 74.

Tower 54 houses at least one central processing unit, random access memory (or other volatile storage), read only memory and hard disc storage (or other non-volatile storage) all of which are interconnected by a bus. The computing environment of tower 54 renders tower 54 operable to execute IDE 70. IDE 70 executes on the central processing unit of tower 54, making appropriate and/or necessary use of other components within tower 54, and receiving instructions from developer D via keyboard 62 and generating responses for developer D on display 58.

Other types of input peripherals, in addition to or in lieu of keyboard 62 are contemplated. Likewise, other types of output peripherals, in addition to or in lieu of display 58 are contemplated.

Computing device 66 is a portable wireless email telephony device, but it should be understood that in other example embodiments computing device 66 can be any type of computing environment for which developer D may be called upon to develop software 74 using IDE 70. Software 74 can be any software object or software application or the like that executes on the computing environment device 66.

It should be understood that, overall, the environment of system 50, and the components therein, are examples and that other configurations are contemplated.

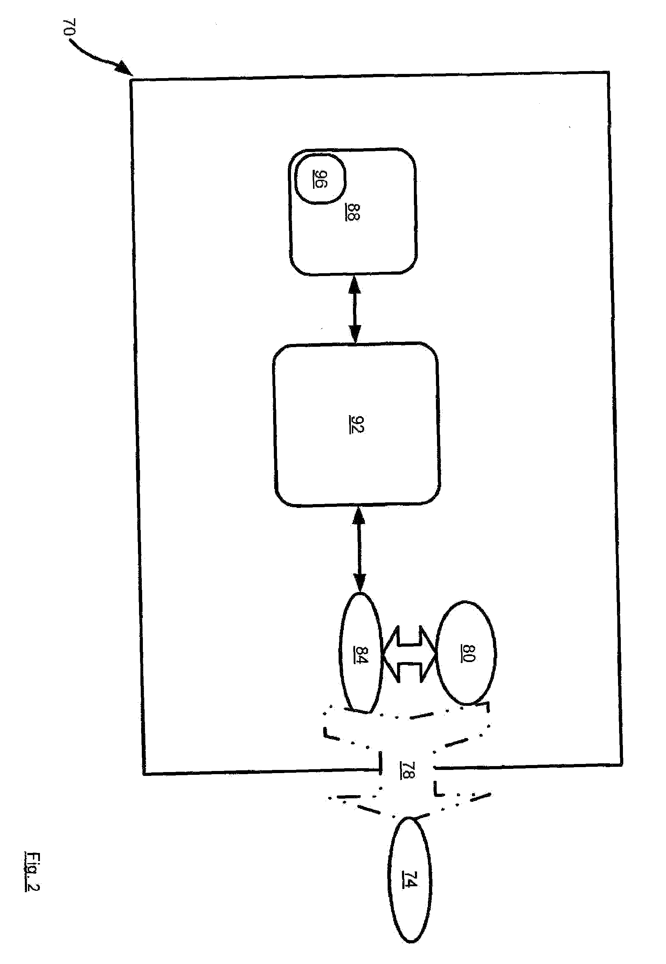

Referring now to Figure 2, IDE 70 is shown in greater detail. IDE 70 includes a programming language 80 within which source code 84 can be developed. Programming language 80 can be based on any known or future-contemplated programming language, including, by way of non-limiting example, C++, Java, BASIC. Of note, however, is that programming language 80 is based on a programming language associated with device 66. Accordingly, programming language 80 is chosen to conform to the computing environment of device 66.

Source code 84, when based on a compiled language (e.g. C++), can be compiled to become software 74 for computing device 66. Source code 84, when based on an interpreted language (e.g. Java, JavaScript, VBScript) can be installed as software 74 on computing device 66, and then during run-time on device 66, software 74 will be interpreted according to a language interpreter on computing device 66. This step of compilation and/or installation is represented by the arrow indicated at 78 in Figure 2.

IDE 70 also includes a development assistant engine 88, which is configured to operate in conjunction with an editor 92, in order to develop source code 84. Developer D can utilize keyboard 62 and display 58 in order to manipulate editor 92 to develop source code 84. Development assistant engine 88 is configured to provide a number of development assistant tools to developer D as developer D uses editor 92. Example tools include, but are not limited to code completion, automatic code correction, and context-sensitive help.

Engine 88 itself includes an engine definition file 96 which defines the tools that are implemented by engine 88. Engine definition file 96 corresponds with the syntax and programming rules associated with language 80, while the remainder of engine 88 is not tied in any manner to language 80.

Engine definition file 96 is fully editable, and, in a present example embodiment, engine definition file 96 is based on the extended Markup Language ("XML"), but engine definition file 96 can also be simply a plain text file or based on any other type of markup language or the like. Engine definition file 96 can be a database file with entries that can be manipulated. In the present example embodiment, file 96 is an XML file used for ease of readability and manipulation. Engine definition file 96 can be implemented as a plurality of discrete sub-files rather than a single file.

An example engine definition file 96 is provided in Table I.

**Table I**

| Example Engine Definition File 96 |
|---|
| * Example Command* |
| |
| <Keyword>while</Keyword> |
| |
| * Example Context Sensitive Help * |
| |
| <CursorFocus="While" Comment= "Utilized for Do-While loop structure. Syntax is "While (Condition)". Correct syntax requires providing Condition which when true will cause looping, and when false will cause looping to cease." /> |

Engine definition file 96 working in conjunction with engine 88 implements the various development assistant tools. Those skilled in the art will recognize that Table I includes an example of at least a portion of an engine definition file 96 that includes content for a context-sensitive help tool wherein a text-bubble is provided adjacent to the text being entered by developer D. As per the example in Table I, assume that language 80 includes the command "While", then engine 88 and definition file 96 can cooperate so that if the cursor in editor 92 is focused on the command "While", then engine 88 would display in editor 92 a text-bubble that displays the comment "Utilized for Do-While loop structure. Syntax is 'While (Condition)'. Correct syntax requires providing Condition which when true will cause looping, and when false will cause looping to cease". The raw-data relationship that associates "While" with the previously-described example comment is maintained within definition file 96, while the logic to present this comment as a text bubble in association with "While" is embedded within engine 88. Engine 88 is configured to read file 96 to obtain the comment and its associated command, "While", and implement logic within engine 88 to present the comment in association with the term "While" within editor 92. Thus, the aspects of the contents of comment that are specific to commands with language 80 are maintained within a separately editable engine definition file 96, without impacting engine 88.

Those skilled in the art will recognize that the code completion tool could include predictive text capabilities. For example, using the example engine definition file 96 in Table I, it is assumed that language 80 includes the command "While". Thus, if developer D enters the text "Wh" into editor 92, then engine 88, working in conjunction with definition file 96 could predict that developer D was entering the command "While" and complete typing the remainder of the command so that developer D need not type the remaining letters of "ile" via keyboard 62. Engine 88 can examine file 96 and determine the presence of the "While" command and define a relationship that associates "Wh" with "While", -- thus the logic to complete "Wh" into "While" would be embedded within engine 88. Engine 88 is configured to read file 96 to obtain the keyword "While" and implement logic within engine 88 to actually perform code completion within editor 92. Thus, the command "While", which is specific to language 80 is maintained within a separately editable engine definition file 96, without impacting the tool functionality in engine 88.

Those skilled in the art will recognize that an automatic code correction tool could include similar functionality to automatic spelling correction found in word processors. For example, again using the example engine definition file 96 in Table I, it is assumed that language 80 includes the command "While", then if developer D enters the text "Whlie" into editor 92, then engine 88 would assume that developer D intended to enter the command "While" and would automatically change "Whlie" into "While". Again, the definition of language 80 can thus be maintained in file 96, without impacting engine 88.

All of the tools can also work in conjunction with each other. Another example tool is a method and tips tool that provides information about a current method that is being worked on. Further tools that can be included within engine 88 will now occur to those skilled in the art.

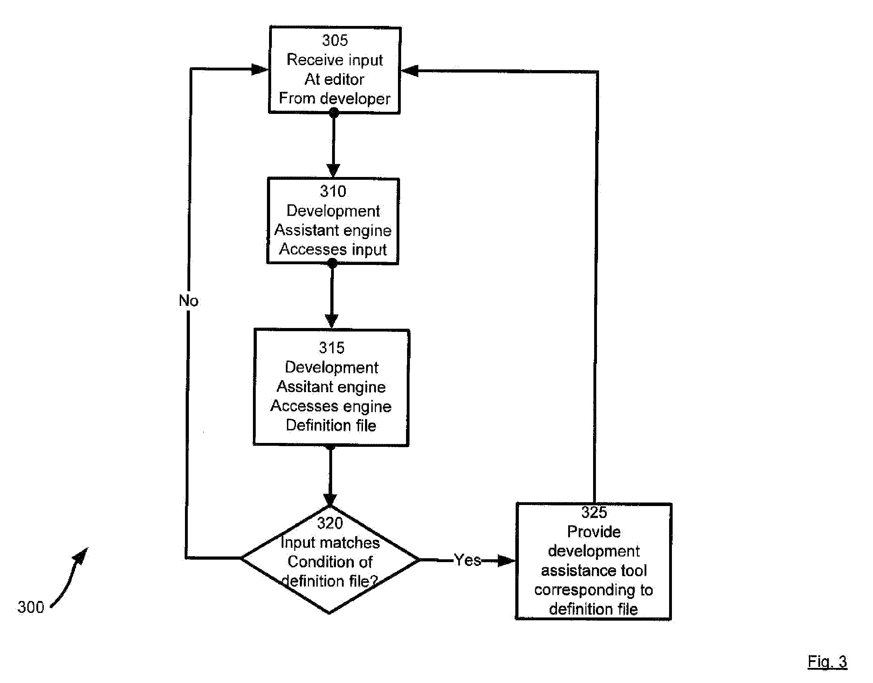

Referring now to Figure 3, a method of programming a computing device is depicted in the form of a flowchart and indicated generally at 300. Method 300 can be used in conjunction with system 50, however, it should be understood that method 300 can be used with other systems, other than system 50, and that both method 300 and system 50 can be varied in accordance with the teachings herein. For example, the sequence of steps of method 300 can be changed, and/or certain steps may be performed substantially in parallel. Also, the particular manner in which any given step is implemented is not particularly limited.

To assist in further understanding system 50 and the understanding of method 300, method 300 will be explained in relation to its performance on system 50. Beginning at step 305, input is received at an editor. The input at step 305 is typically programming instructions that are received by editor 92, as those instructions are entered via keyboard 62, and simultaneously displayed on display 58 in accordance with the functionality of editor 92.

Next, at step 310, the development assistant engine accesses the input received at step 305. In system 50, the input that was received by editor 92 is now accessed by development assistant engine 88.

At step 315, the development engine accesses the engine definition file. In system 50, development assistant engine 88 will read the contents of engine definition file 96. In a presently example embodiment, development assistant engine 88 can load definition file 96 into random access memory for speed of execution and traversal of file 96.

At step 320, a determination is made as to whether any input received at step 305 matches any of the conditions of the engine definition file. Step 320 in a present example embodiment is performed by development assistant engine 88, which makes a comparison between any conditions that have been defined in engine definition file 96 with the input that was accessed by development assistant engine 88 at step 310. If a match is not found, then method 300 returns from step 320 back to step 305. However, if a match is found, then method 300 advances from step 320 to step 325, at which point a development assistant tool corresponding to the condition matched at step 320 is provided via editor 92 on display 58 to developer D.

Those skilled in the art will now recognize that the performance of step 325 can correspond with the above-described examples given in relation to the example engine definition file 96 Table I. For example, assuming that the input received at step 305 was "Wh", then the code completion tool can be provided at step 325 to automatically type the complete command "While" within editor 92 and thereby obviate the need for developer D to finish typing the "ile".

Note that, at this point, method 300 can cycle back from step 325 to step 305, and now detect the input "While" at step 305, such that during this cycle through method 300, at step 325 the context sensitive help tool can be provided at step 325 and thereby provide a text-bubble which displays the comment "Utilized for Do-While loop structure. Syntax is "While (Condition)". Correct syntax requires providing Condition which when true will cause looping, and when false will cause looping to cease."

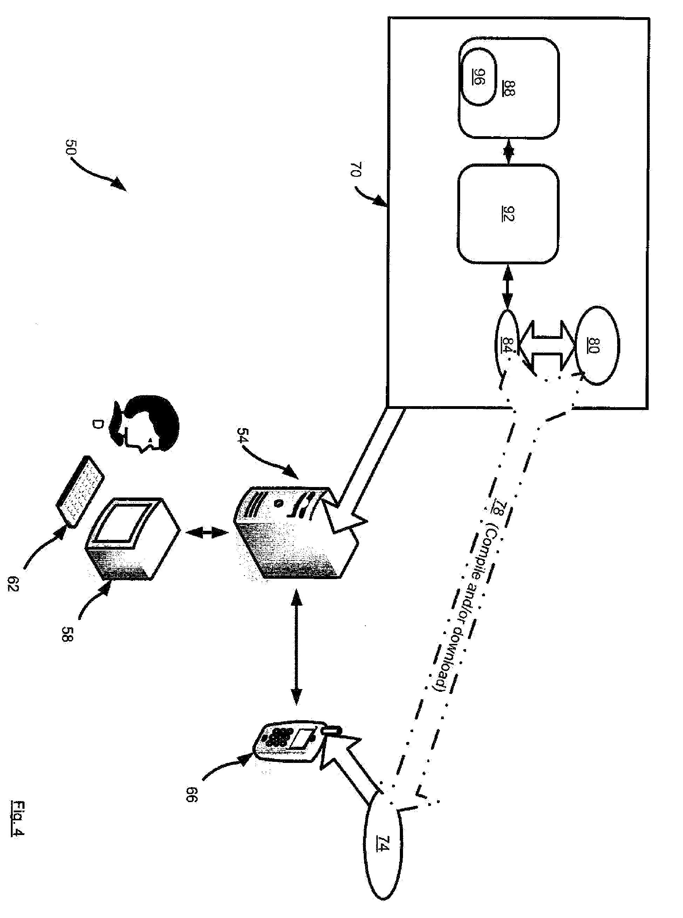

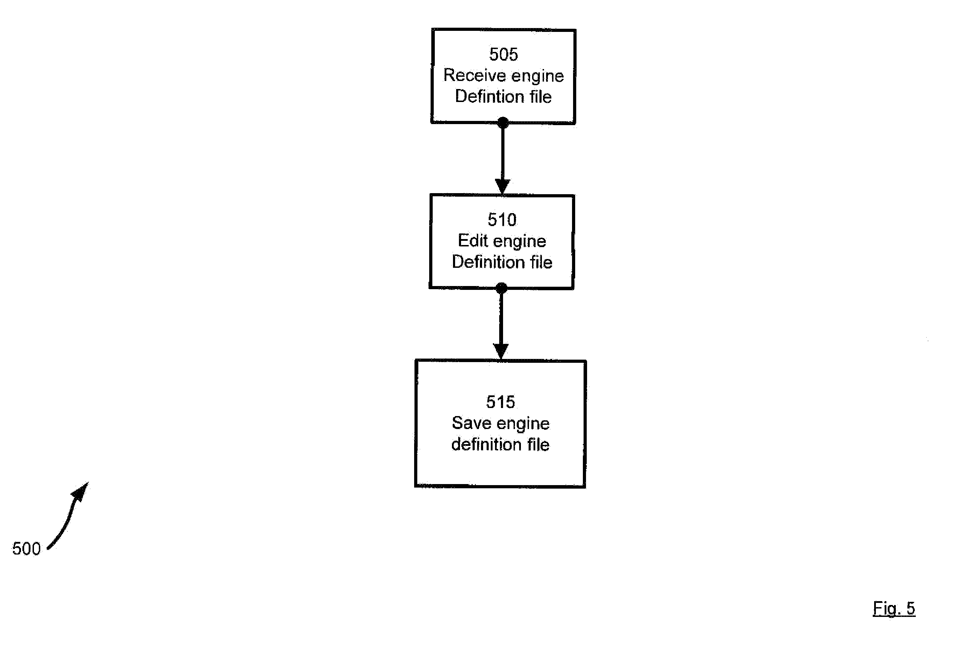

Another example embodiment represents a method for modifying an IDE to correspond with a different or new computing device. This example embodiment will now be explained with reference to Figures 4-6. Figure 4 combines Figures 1 and 2 to show system 50 all within a single Figure. Of note in Figure 4, language 80 corresponds to a computer programming language native to computing device 66, and likewise engine definition file 96 corresponds to language 80. However, editor 92, engine 88 independent from language 80 and/or device 66. Figure 5

Figure 5 shows a flowchart depicting a method for modifying an IDE to correspond with a different or new computing device that has a new language associated therewith.

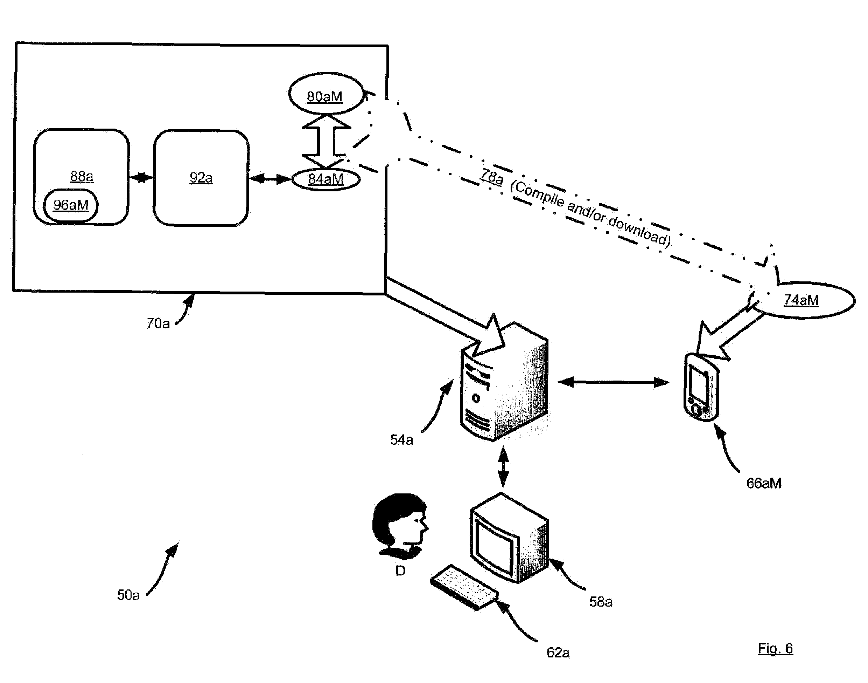

Figure 6 shows system 50a, which is substantially the same as system 50 and identical elements have identical references, except followed by a suffix a. However, elements in system 50a that are modified from their corresponding elements in system 50 also include the suffix M. Thus, in Figure 6, device 66aM is a different device than device 66. Likewise, language 80aM corresponds to device 66aM, and is also different from language 80a. Likewise, language definition file 96aM corresponds with language 80aM, and is different than definition file 96.

Referring again to Figure 5, Figure 5 shows a method whereby language definition file 96 can be modified so that IDE 70 can be used to develop software for a modified computing device 66aM instead of the original computing device 66. At step 505, an existing engine definition file is received. Thus, in the example shown in Figure 4, language definition file 96 is loaded into an editor. Editor 92 can be used to edit file 96 (though relying solely on the editing features of editor 92 and without reliance on the features of engine 88), however this is a non-limiting example and any editor can also be used due to the structure of file 96. At step 510, language definition file 96 is edited. File 96 is edited to conform to language 80aM in order to create language definition file 96aM. At step 515, language definition file 96aM is saved within engine 88a, as depicted in Figure 6.

An example engine definition file 96aM is provided in Table II

**Table II**

| Example modified Engine Definition File 96aM |
|---|
| * Example Command* |
| <Keyword>while</Keyword> |
| <Keyword>until</Keyword> |
| |
| * Example Context Sensitive Help * |
| <CursorFocus="While" Comment= "Utilized for Do-While loop structure. Syntax is "While (Condition)". Correct syntax requires providing Condition which when true will cause looping, and when false will cause looping to cease." /> |
| <CursorFocus="Until" Comment= "Utilized for Do-Until loop structure. Syntax is 'Until (Condition)'. Correct syntax requires providing Condition which when true will cause looping, and when false will cause looping to cease." /> |

A comparison of Table II and Table I shows that Table II is substantially the same as Table I, except that new text identifying a new keyword has been added, namely, the keyword "until". Additional context sensitive help has been added, namely, that if the text "Until" is detected then the following comment will be displayed: "Utilized for Do-Until loop structure. Syntax is "'Until (Condition)"'. Correct syntax requires providing Condition which when true will cause looping, and when false will cause looping to cease.

Thus, once method 500 has been performed, developer D can immediately begin developing software for device 66aM, based on developer D's existing understanding of device 66, and without having to take any particular steps to learn about the functionality of device 66aM.

Thus, as manufacturers of devices such as 66 enhance, change or create new devices, those same manufacturers can simply provide a copy of language 80 that corresponds to the device, and likewise provide a copy of engine definition file 96 in text format, without having to provide a completely new IDE as well. Language 80 and engine definition file 96 are modular, and can be changed, without disrupting or requiring changes to, or recompilation of the IDE itself, or any of the other components therein. The foregoing can be useful when device 66 already relies on the essential substance of a well-known programming language that is already known to developer D, but includes various extensions to that programming language that are unique to the functionality of device 66 and yet which are unknown to developer D. Likewise, developer D can continue to use the same IDE environment with which the developer D is already familiar for any new devices 66 with which that developer D is not already familiar.

It should also be understood that method 500 can be modified to simply create a new definition file for any new programming languages that may be developed.

The foregoing provides certain example embodiments, but it should be understood that variations, subsets, and combinations of those example embodiments are contemplated. For example, it should be understood that the Engine Definition Files in Table I and Table II are greatly simplified in order to assist in explaining the teachings herein. Appendix I attached hereto shows a more detailed, yet still example, engine definition file 96 in the form of two files, MDScript.xml and Library.xml, which collectively can include engine definition file 96. Appendix II, attached hereto, shows a detailed example of text that can be added to engine definition file 96, such that collectively Appendix I and Appendix II can represent engine definition file 96aM.

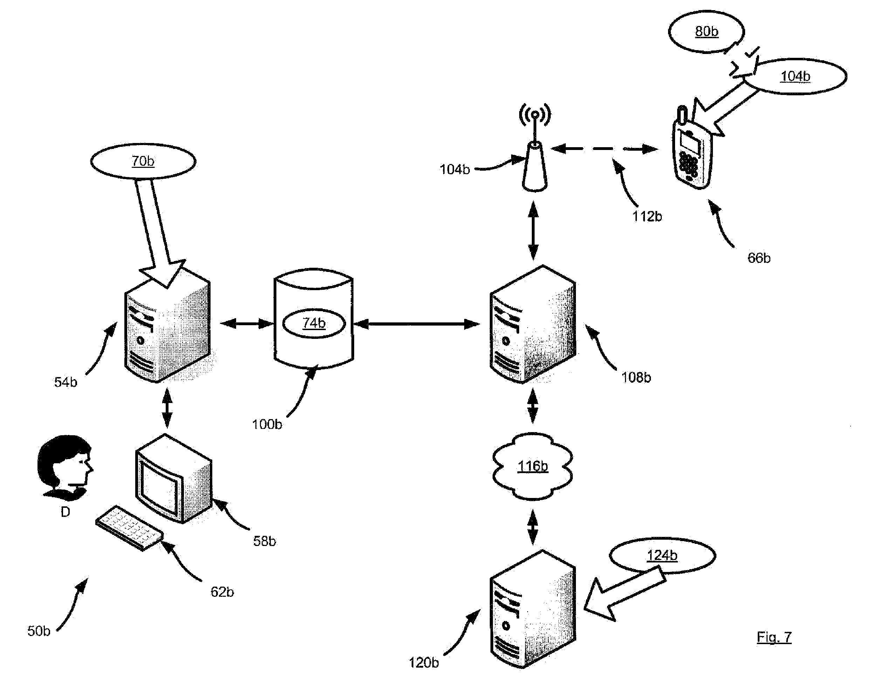

The teachings herein can also be incorporated with one or more of the teachings of WO-2004-59938, WO-2004-59957, WO-2004-59939, and U.S. Application Serial No. 11/078,331, the contents of each of which are incorporated herein by reference. Indeed, Figure 7 shows system 50b, which is substantially the same as system 50 and identical elements have identical references, except followed by a suffix b. However, certain new elements appear in system 50b and those elements reflect aspects of how system 50 can be modified to operate with the teachings of WO-2004-59938, WO-2004-59957, WO-2004-59939 and U.S. Application Serial No. 11/078,331.

More specifically, system 50b also includes a data repository 100b onto which software 74b can be stored for eventual execution on device 66b using a runtime environment 104b on device 66b. Indeed, system 50b is configured for software 74b where software 74b is based on an interpreted language 80b, such as JavaScript or the like. Thus, runtime environment 104b is an application on device 66b that corresponds to language 80b -- which is of course the same language 80b that is used by IDE 70b used to create software 74b. Runtime environment 104b also, of course, corresponds to programming language 80b.

System 50b thus also includes an application gateway 108b that is connected to repository 100b. In turn, application gateway 108b is connected to a wireless base station 104b, which permits device 66b to communicate with application gateway 108b via wireless link 112b. (Other infrastructures, however, that permit device 66b to communicate with application gateway 108b are contemplated). Application gateway 108b is also connected to a wide area network, which in the present example embodiment is the Internet 116b. Internet 116b, in turn, is connected to an application server 120b. Application server 120b can host any type of service 124b, such as a web-page, am application, or any other type of service that a user of device 66b may wish to access using software 74b via Internet 116b.

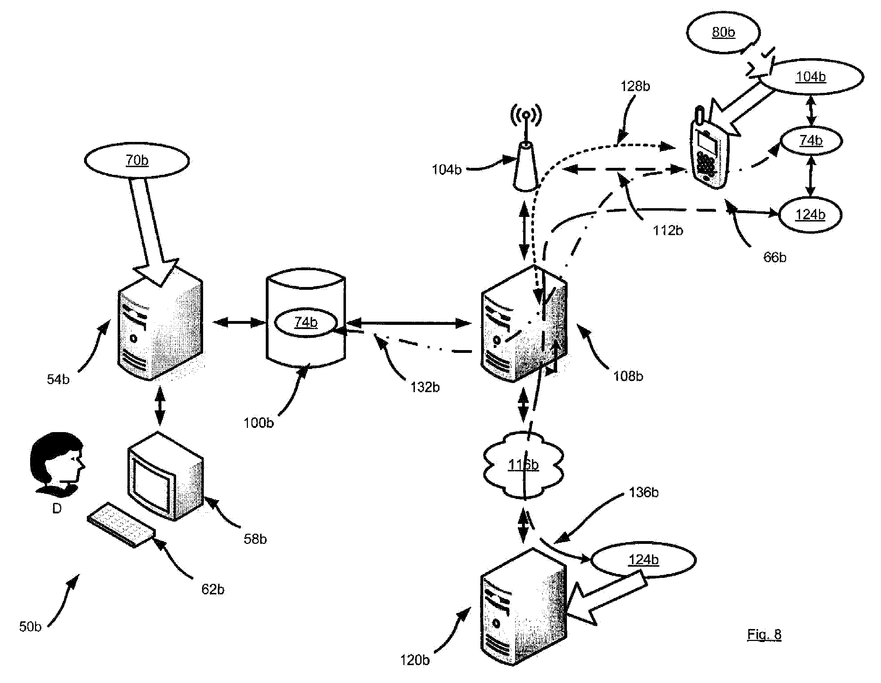

Example operation of system 50b is shown in Figure 8, wherein a request from device 66 to application server 120b is represented as a dotted line which is indicated at reference 128b. Request 128b includes a request for service 124b. Application server 120b is configured to correlate information about device 66b, including the fact that language 80b is specific to device 66b, and to provide a response to request 128b by providing software 74b to runtime environment 104b within device 66, such response being represented as a dotted line which is indicated at reference 132b. While response 132b can result in the entirety of software 74b being "downloaded" to device 66b, it should be understood that it is contemplated that scripts (i.e. portions) of software 74b are provided to device 66b as needed and that runtime environment 104b executes those scripts, and thus response 132b can in fact represent a plurality of responses. Once relevant scripts of software 74b are executing in device 66b, then application gateway 108b also provides a second response by providing service 124b to software 74b as software 74b is executing within device 66b and calling upon service 124b. The second response (which in fact may be a plurality of responses) is represented as a dotted line which is indicated at reference 136b.

It is to be reiterated that software 74b and service 124b can be virtually unlimited in scope and thus that system 50b represents a generic architecture. A specific example can assist, however, in understanding the full potential scope of system 50b. Service 124b can include mapping information, while software 74b can be mapping software. Thus, should a user of device 66b wish to view the mapping information associated with service 124b, then the mapping software 74b needed to view the maps can be executed in runtime environment 104b and then service 124b can be accessed. One advantage of this example embodiment is that developer D can create different mapping software respective to different devices, and yet each of those devices can access the same service 124b, without modifying service 124b and/or having to cause 124b to be specifically tailored to each device that accesses it. Thus, as new devices are deployed, developer D can simply make software to those devices available in repository 100b, and no modifications to service 124b are required.

It is to be understood that combinations, variations, and/or subsets of the various example embodiments described herein are contemplated.

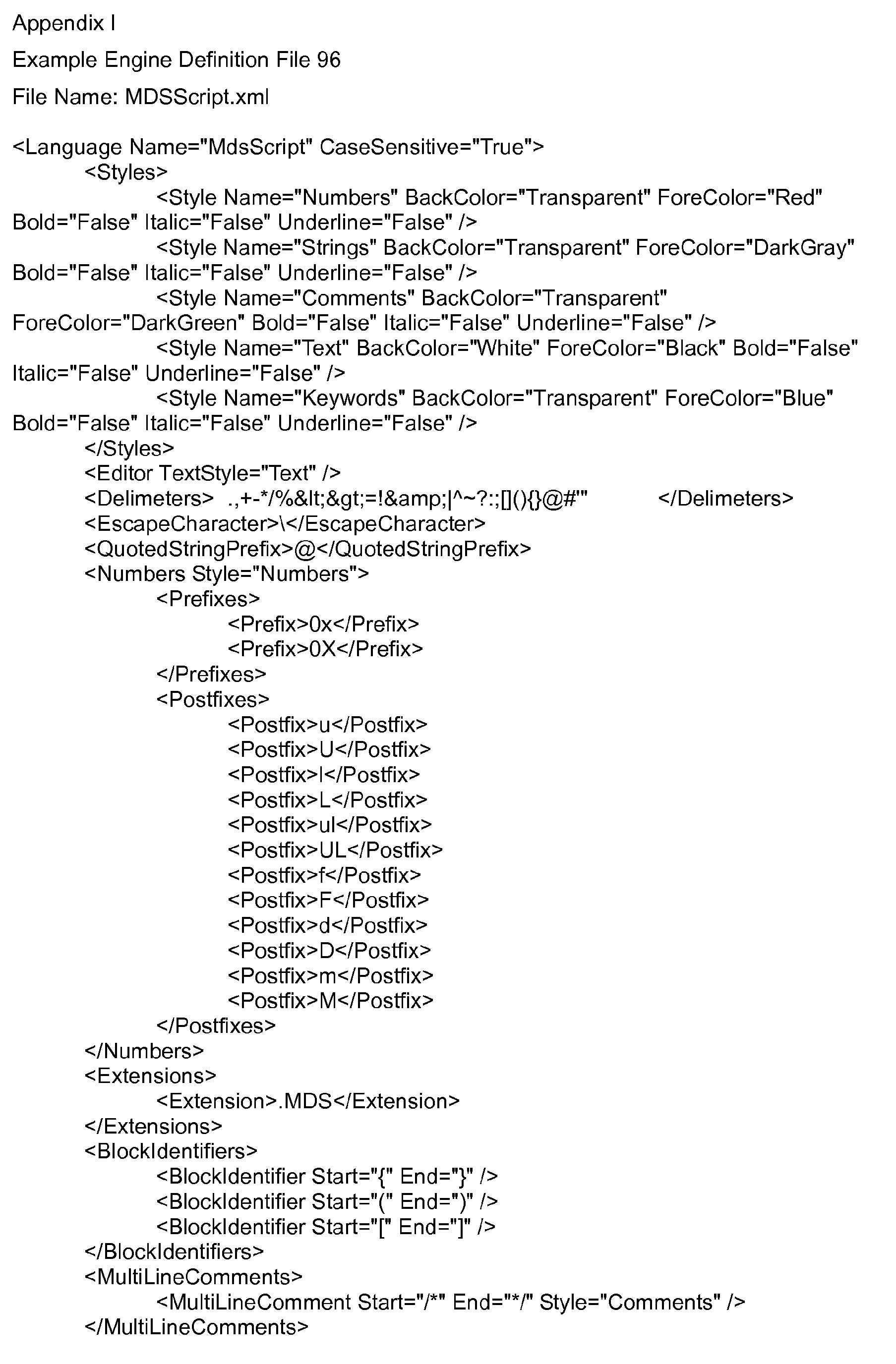

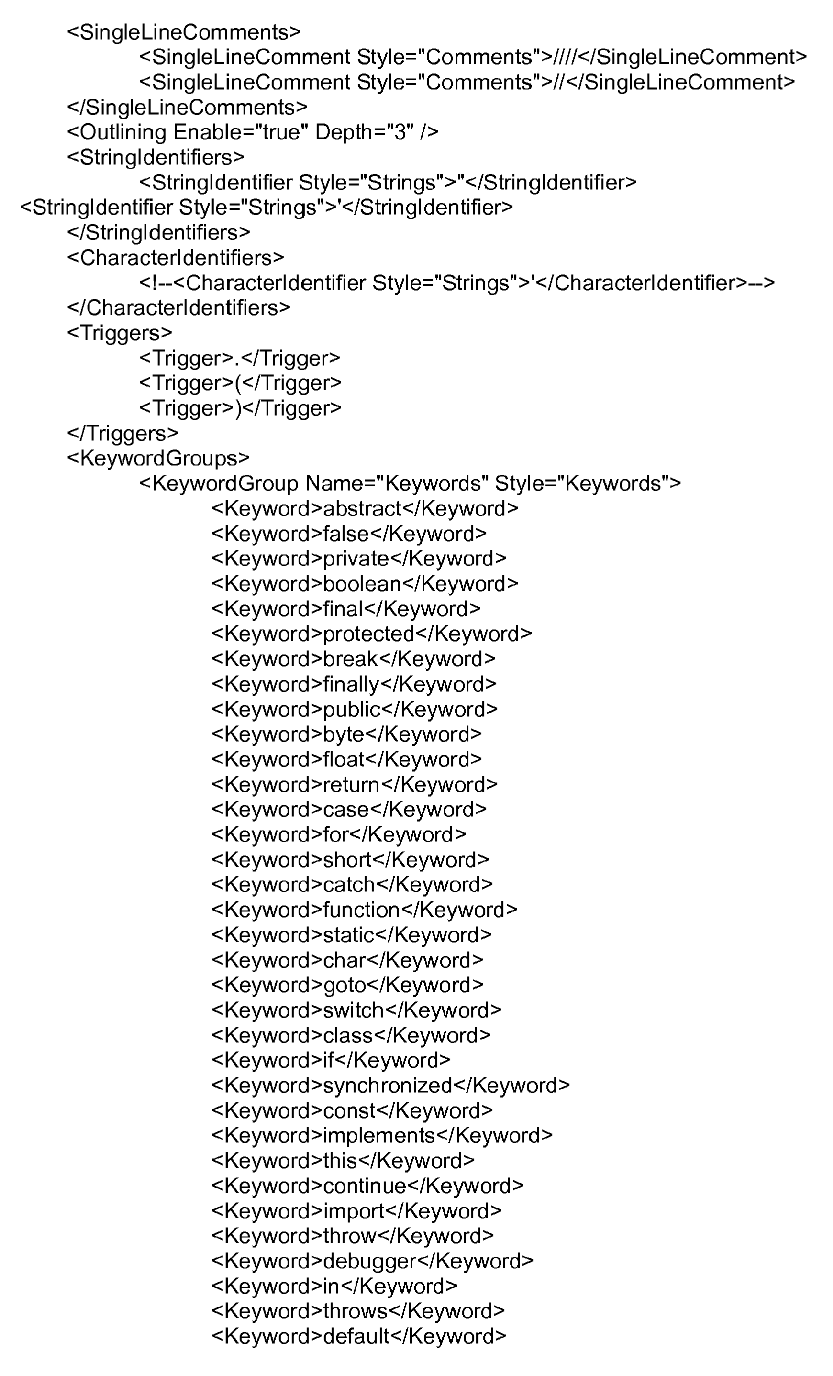

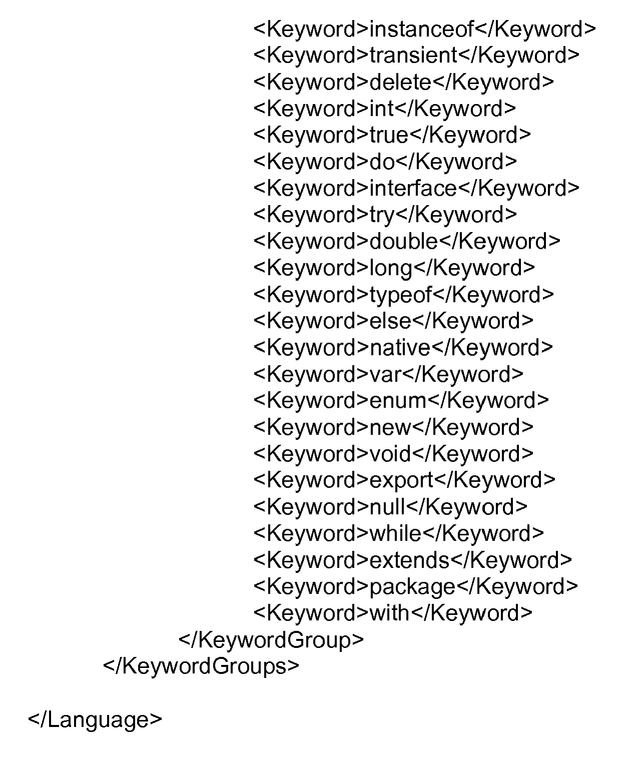

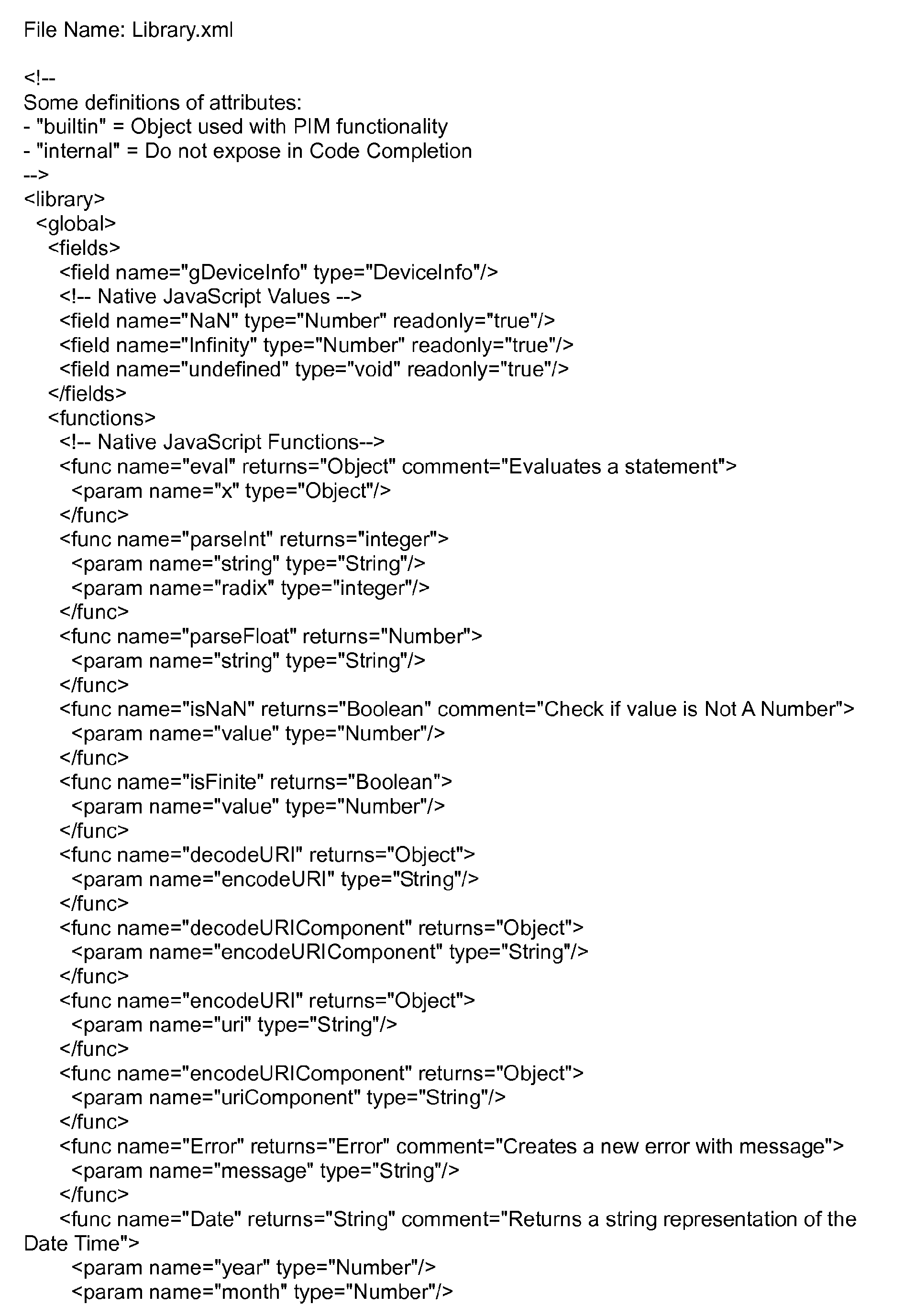

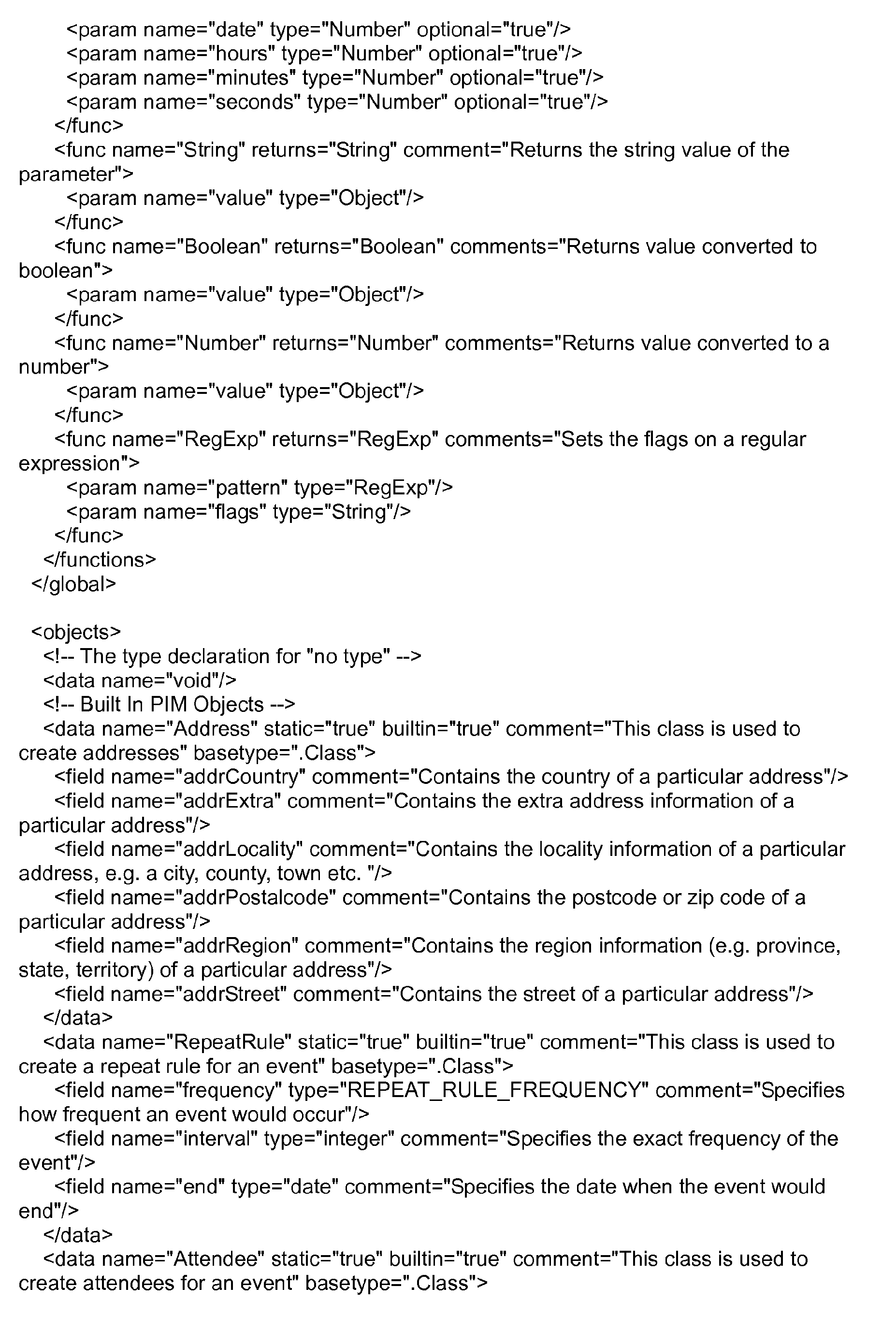

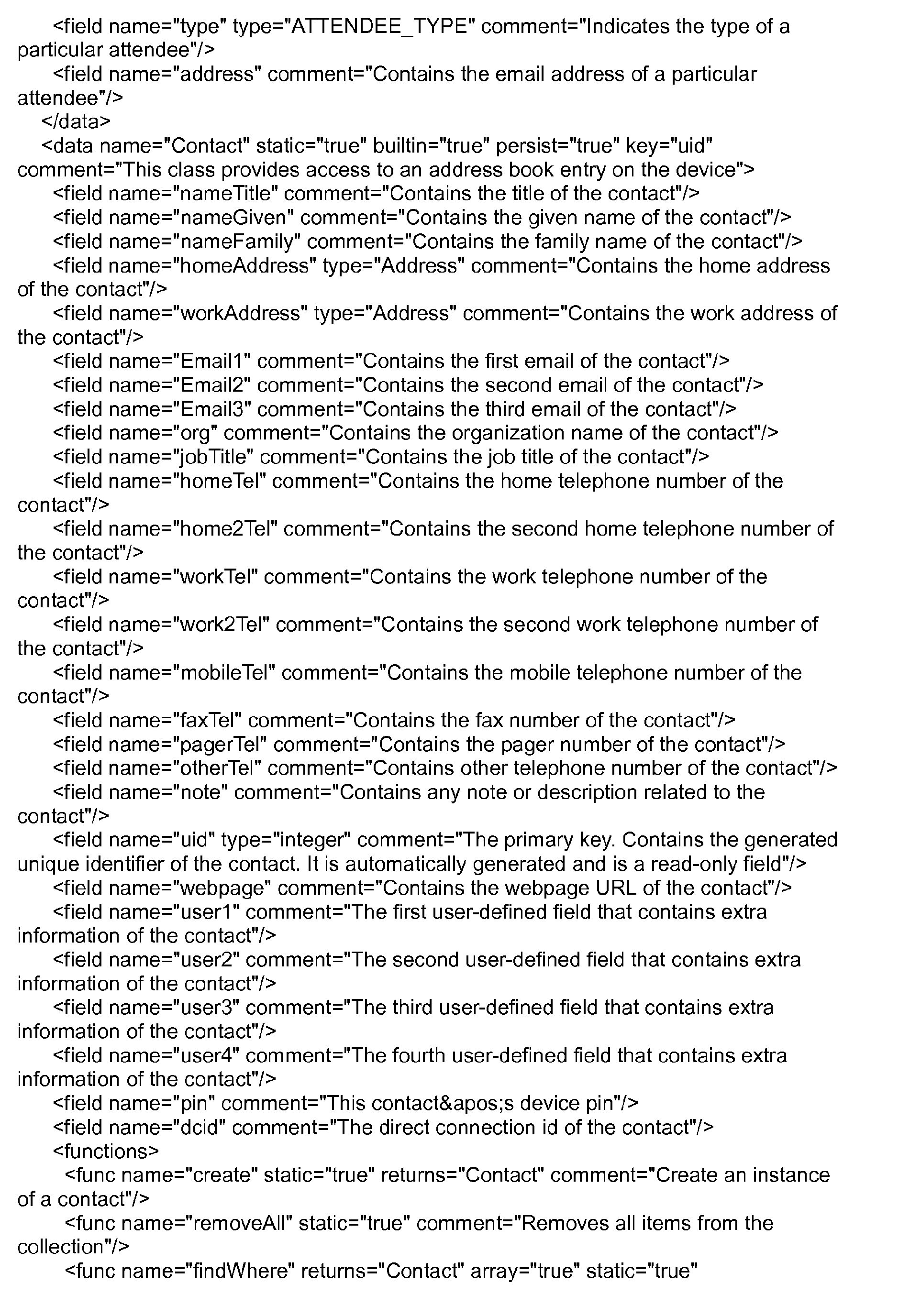

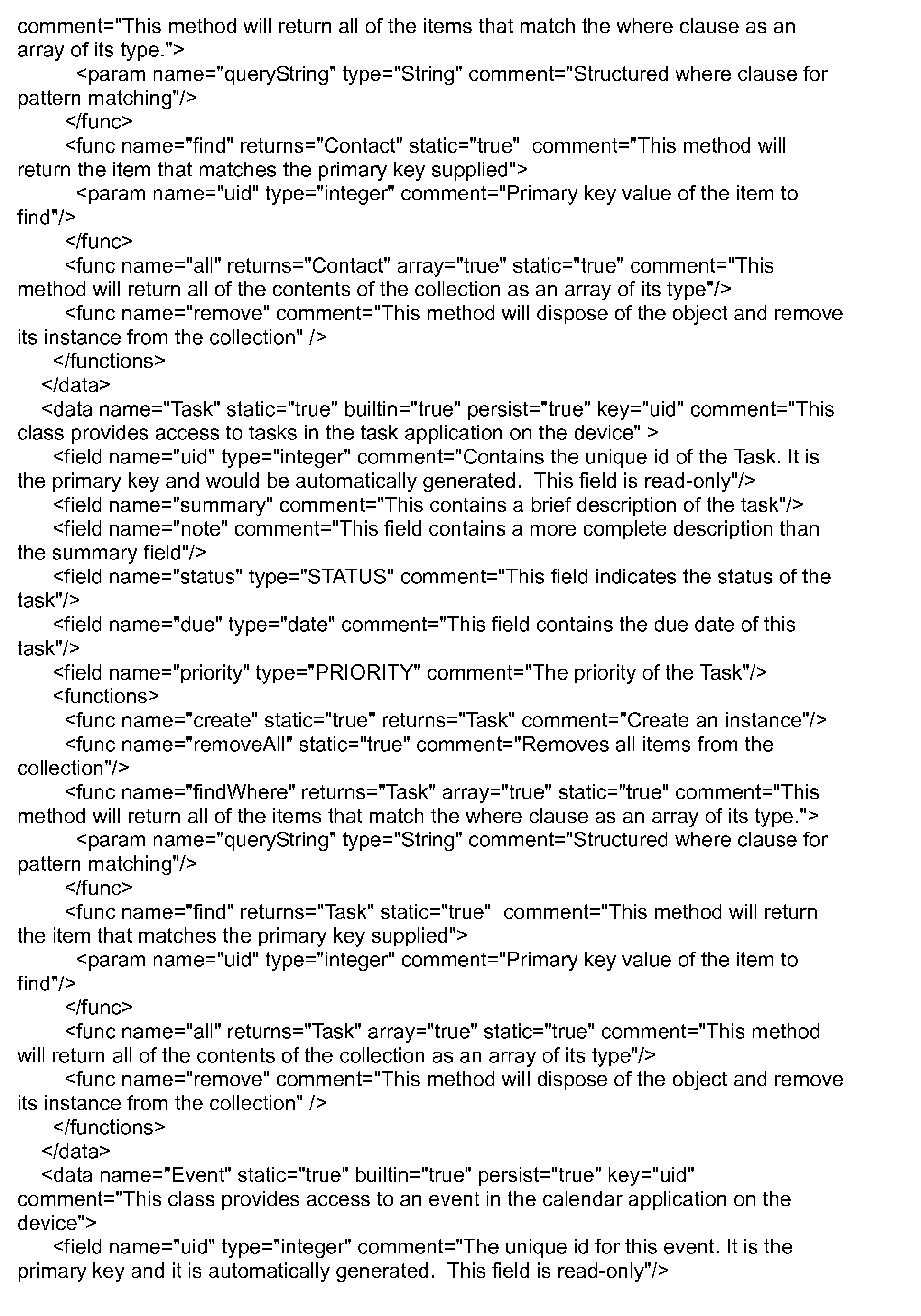

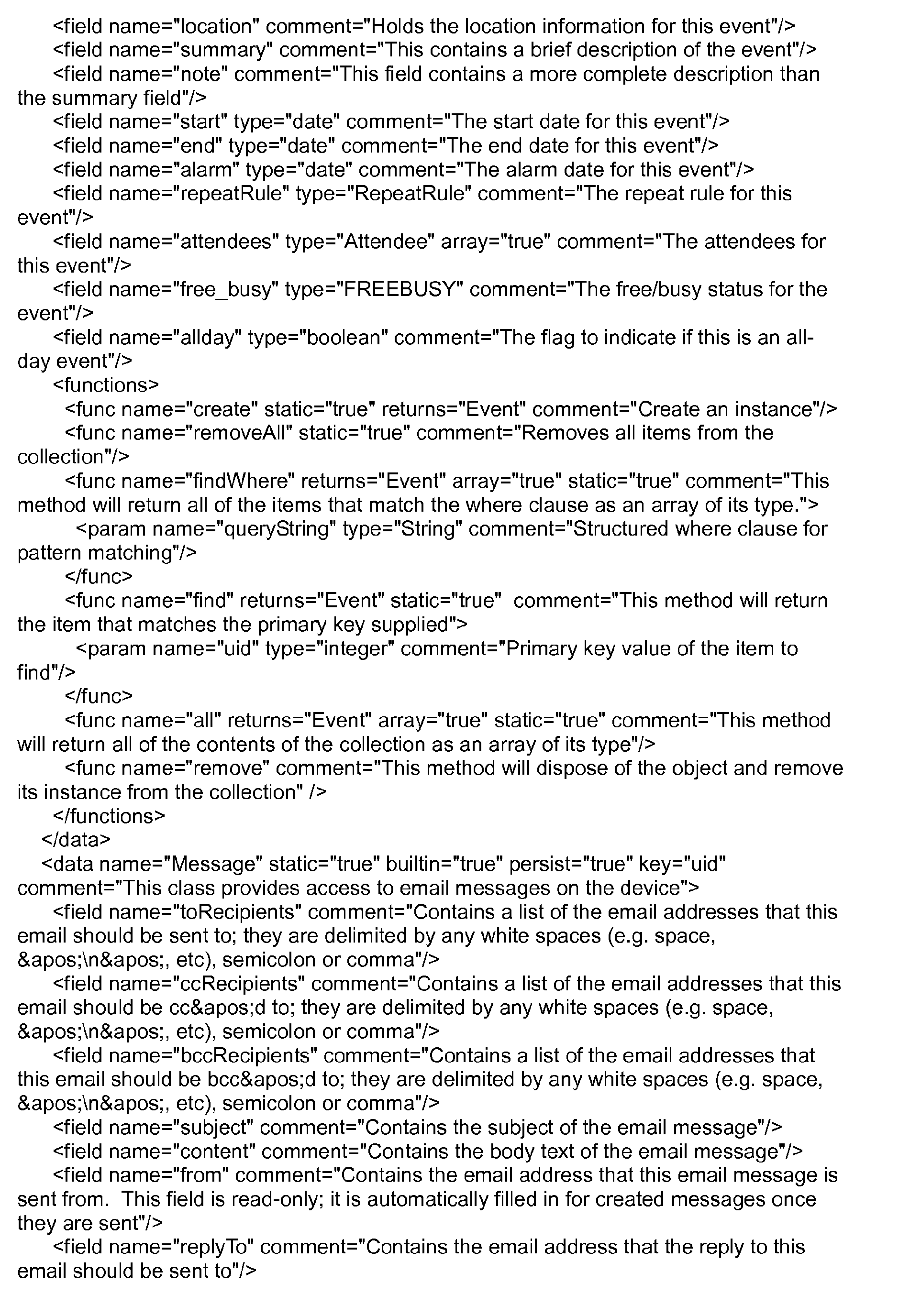

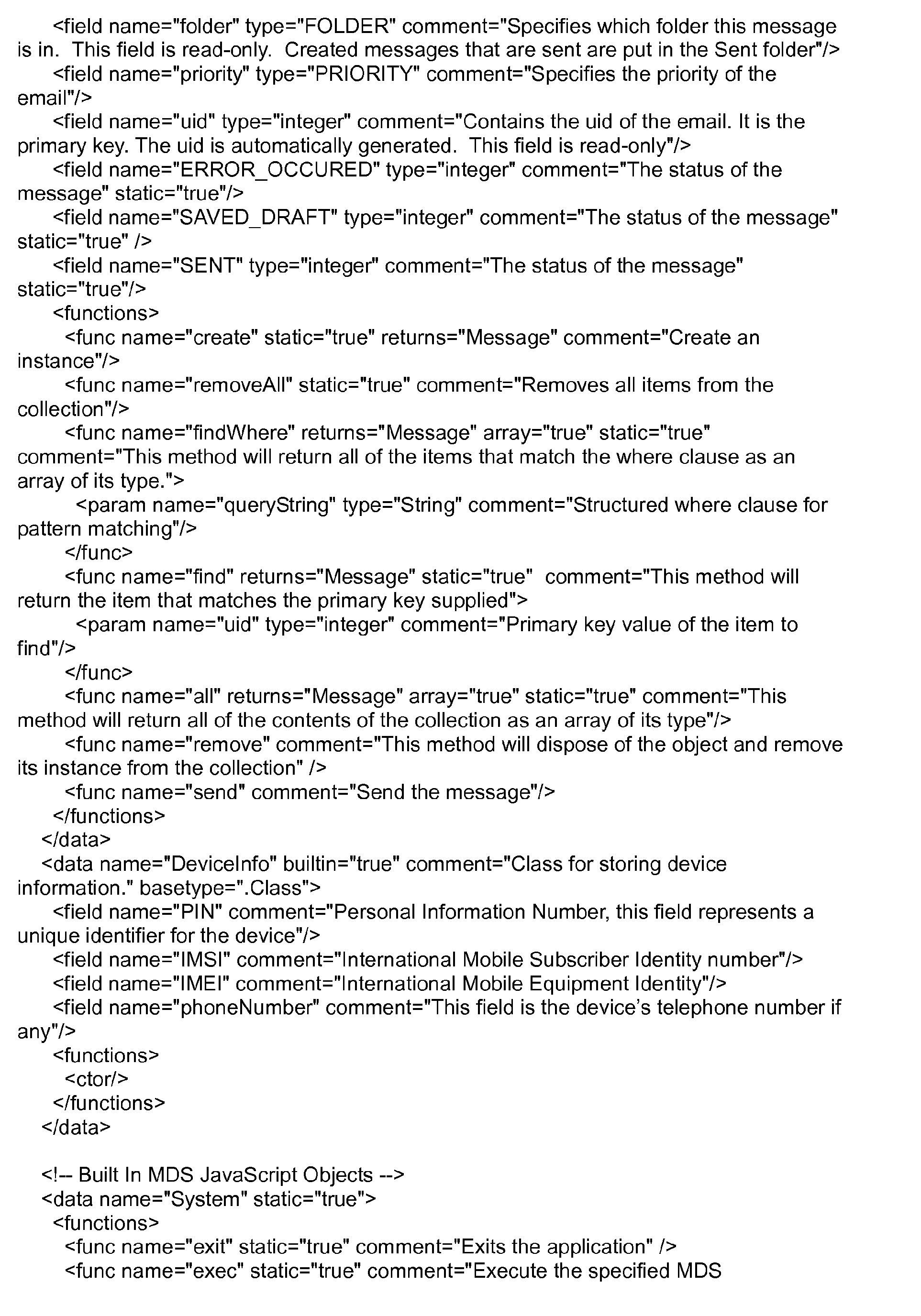

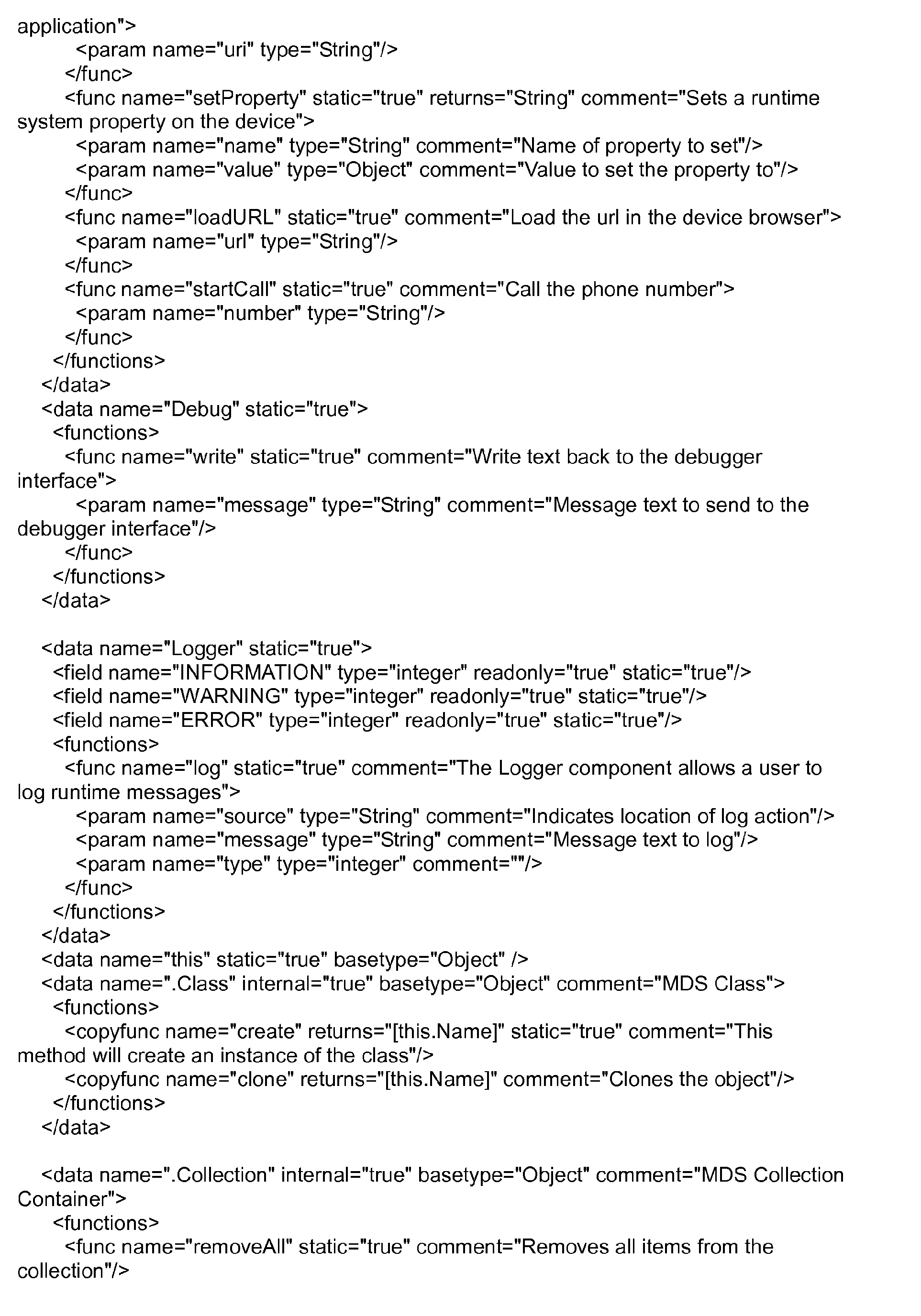

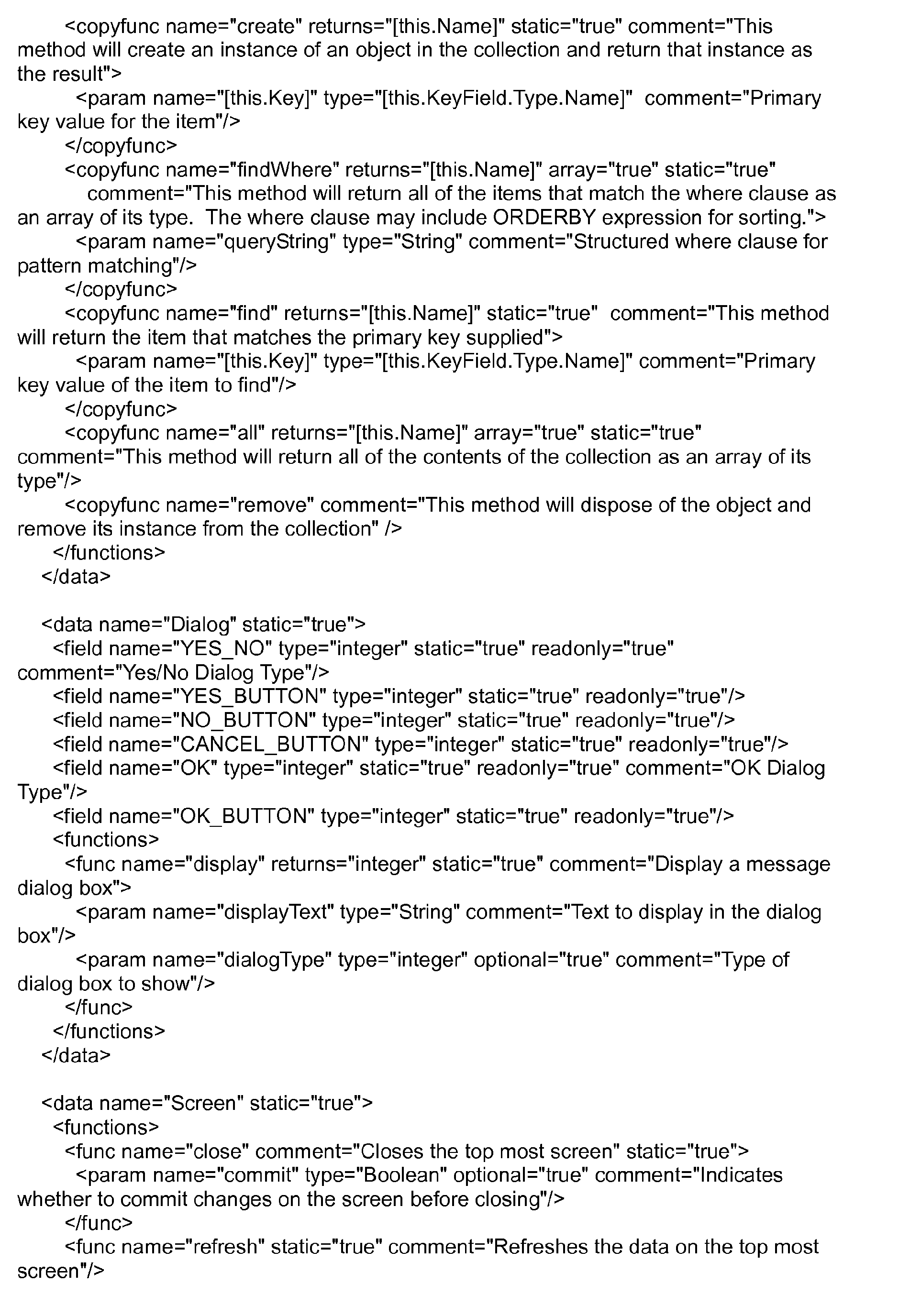

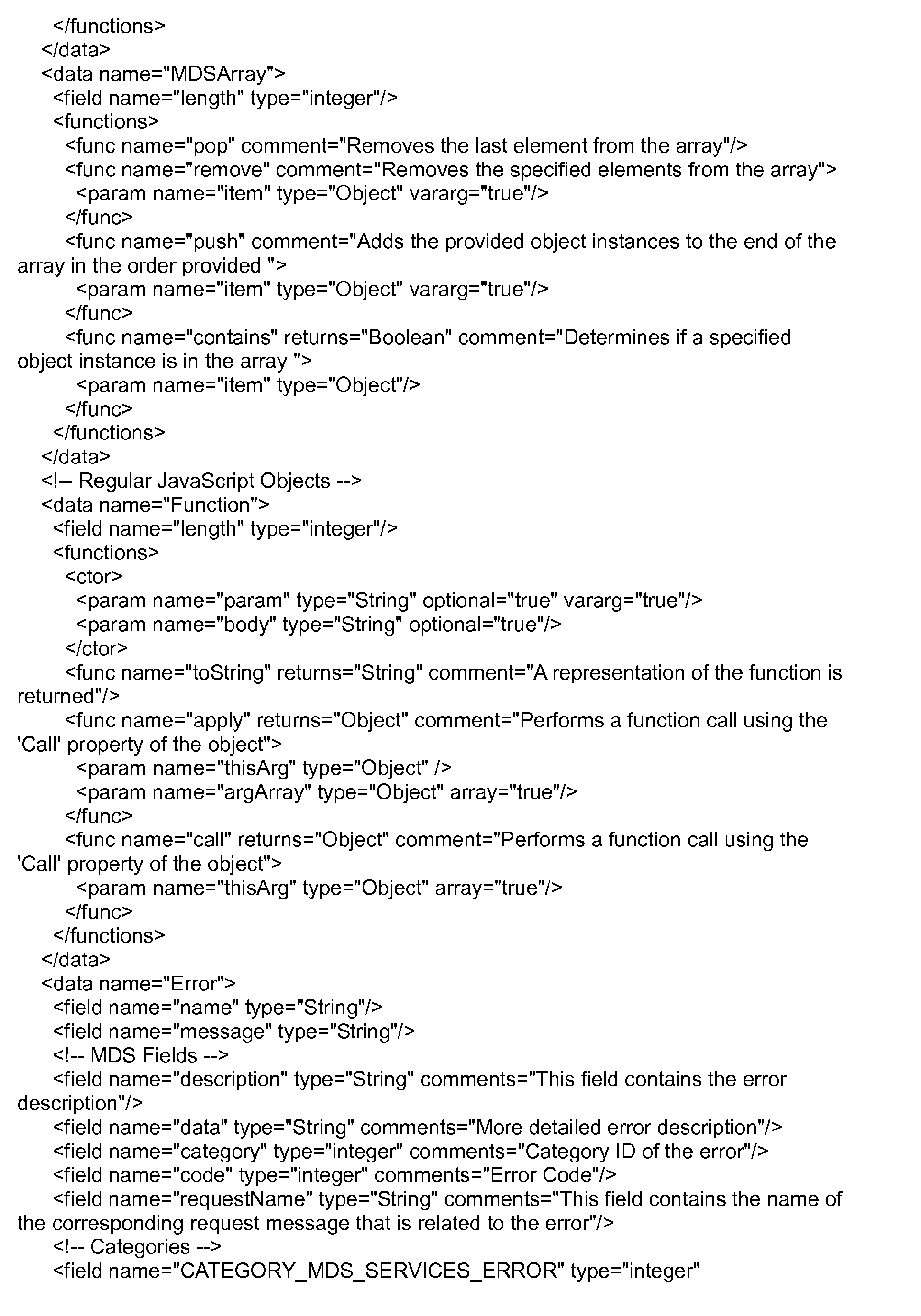

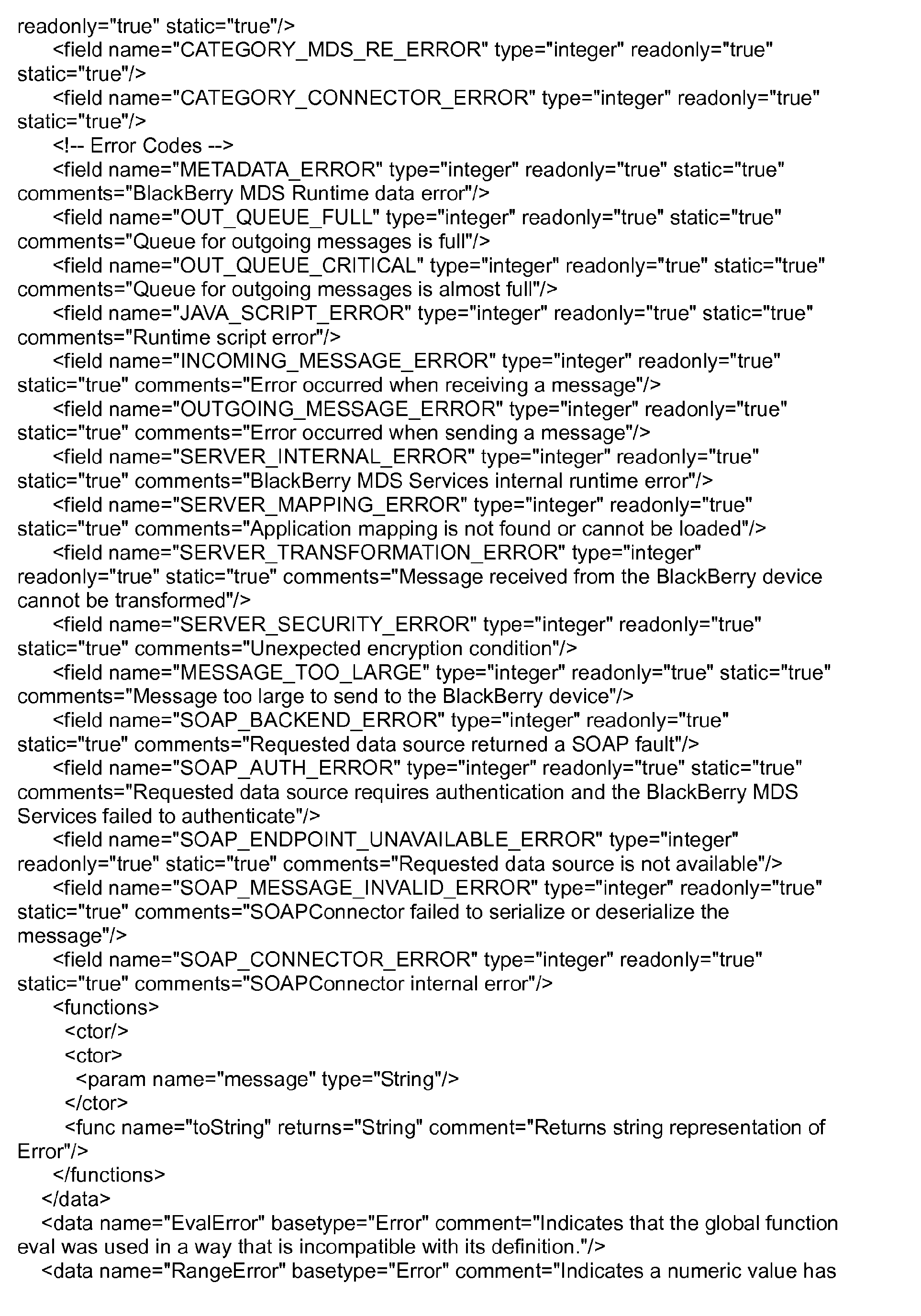

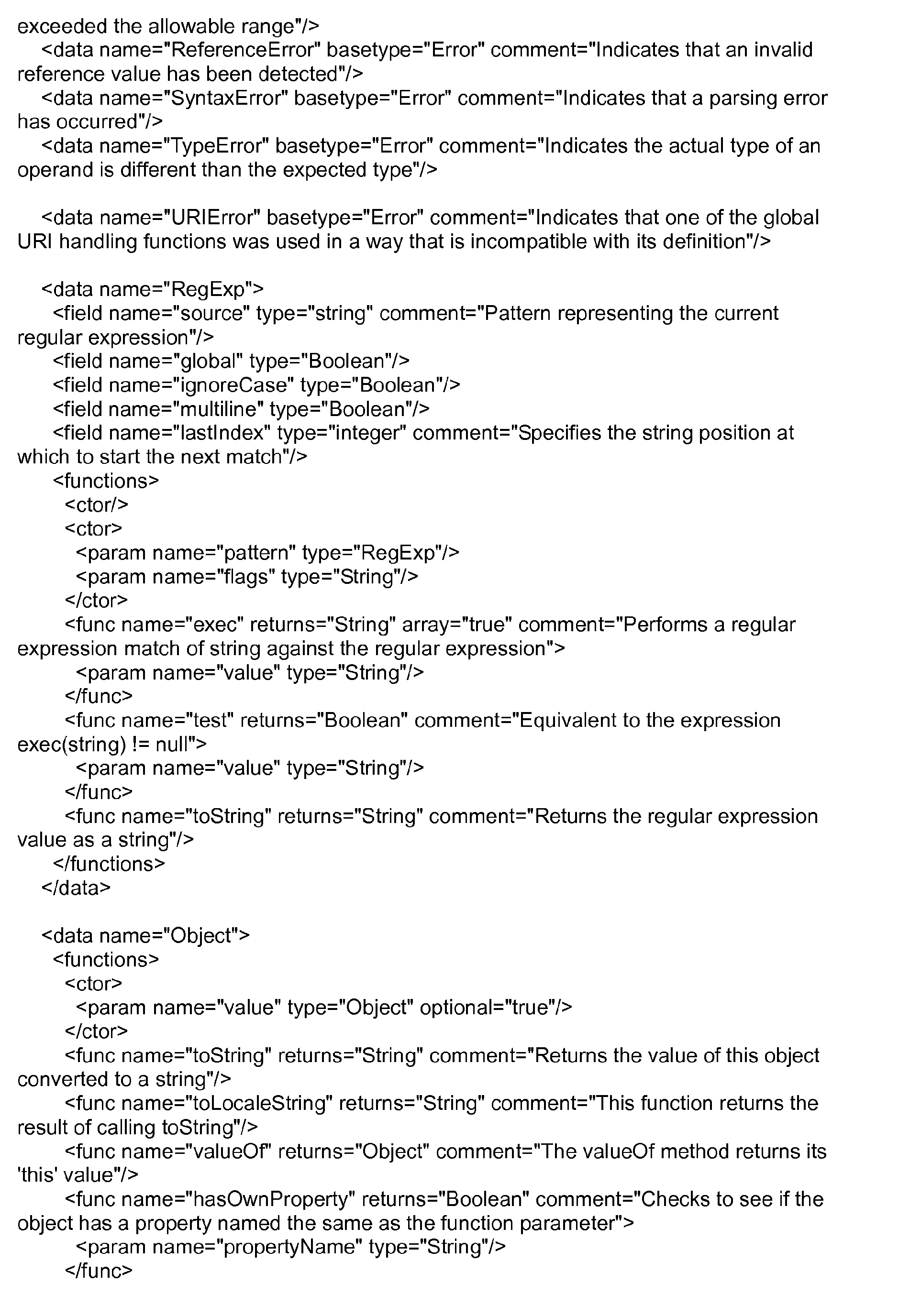

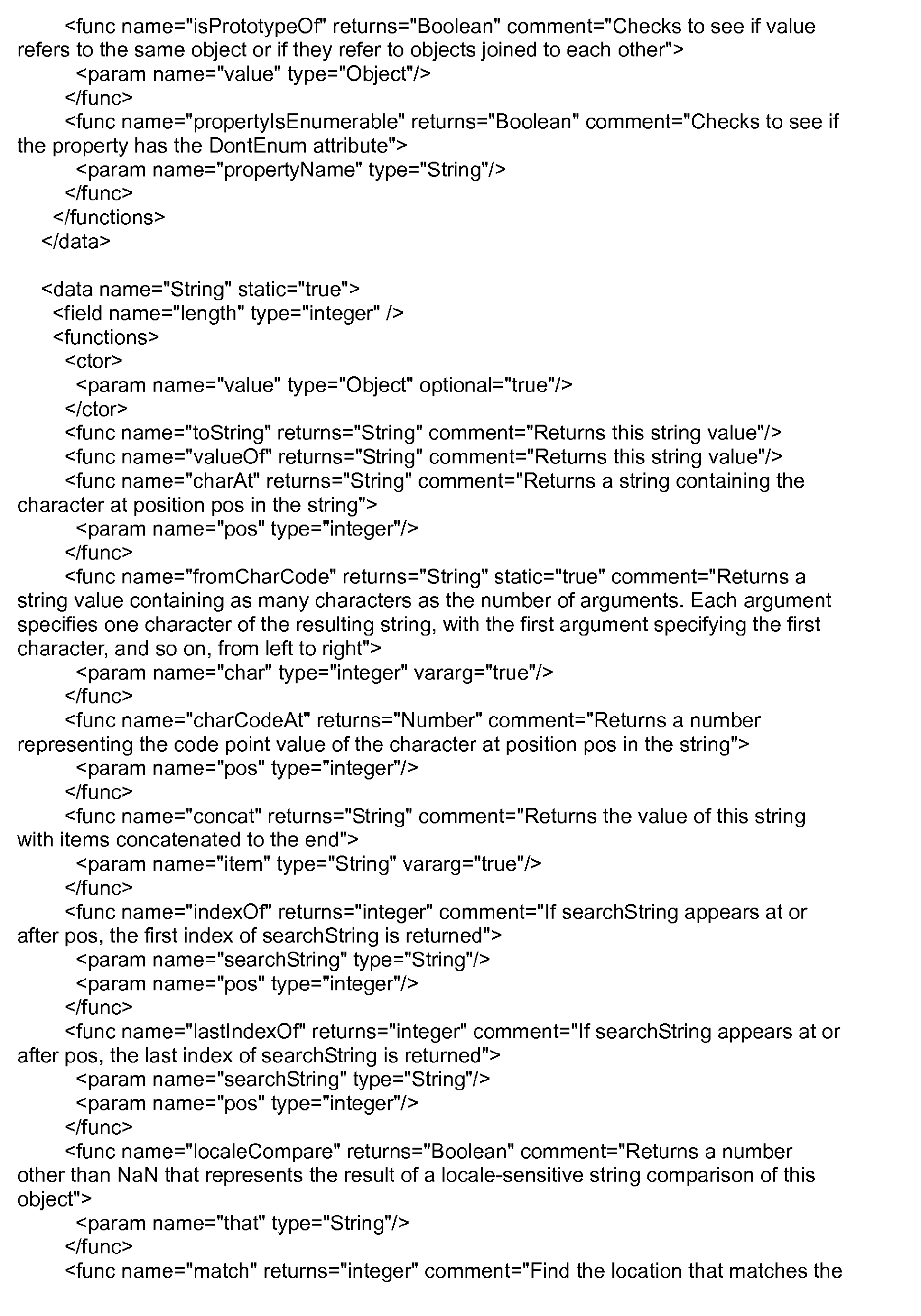

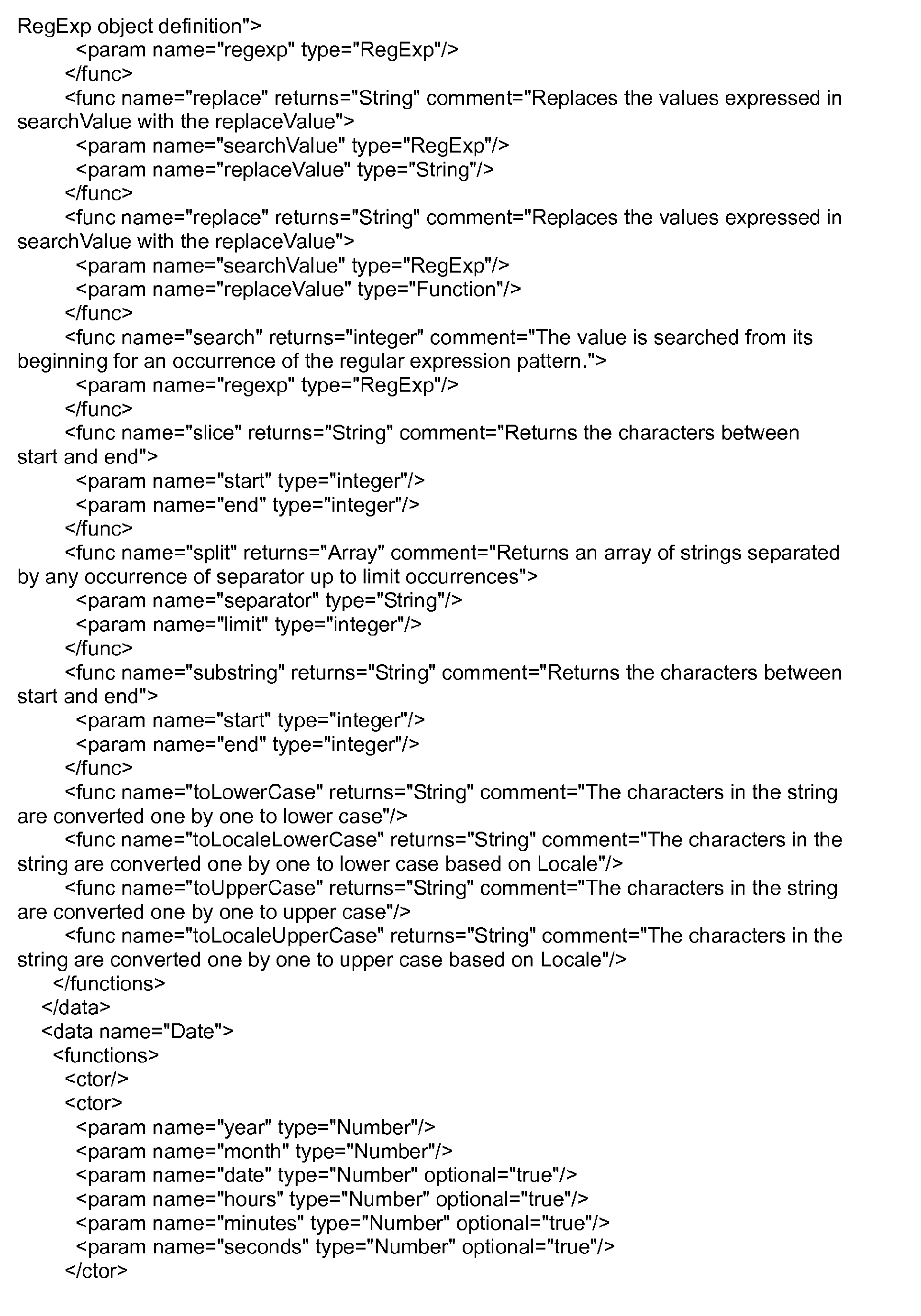

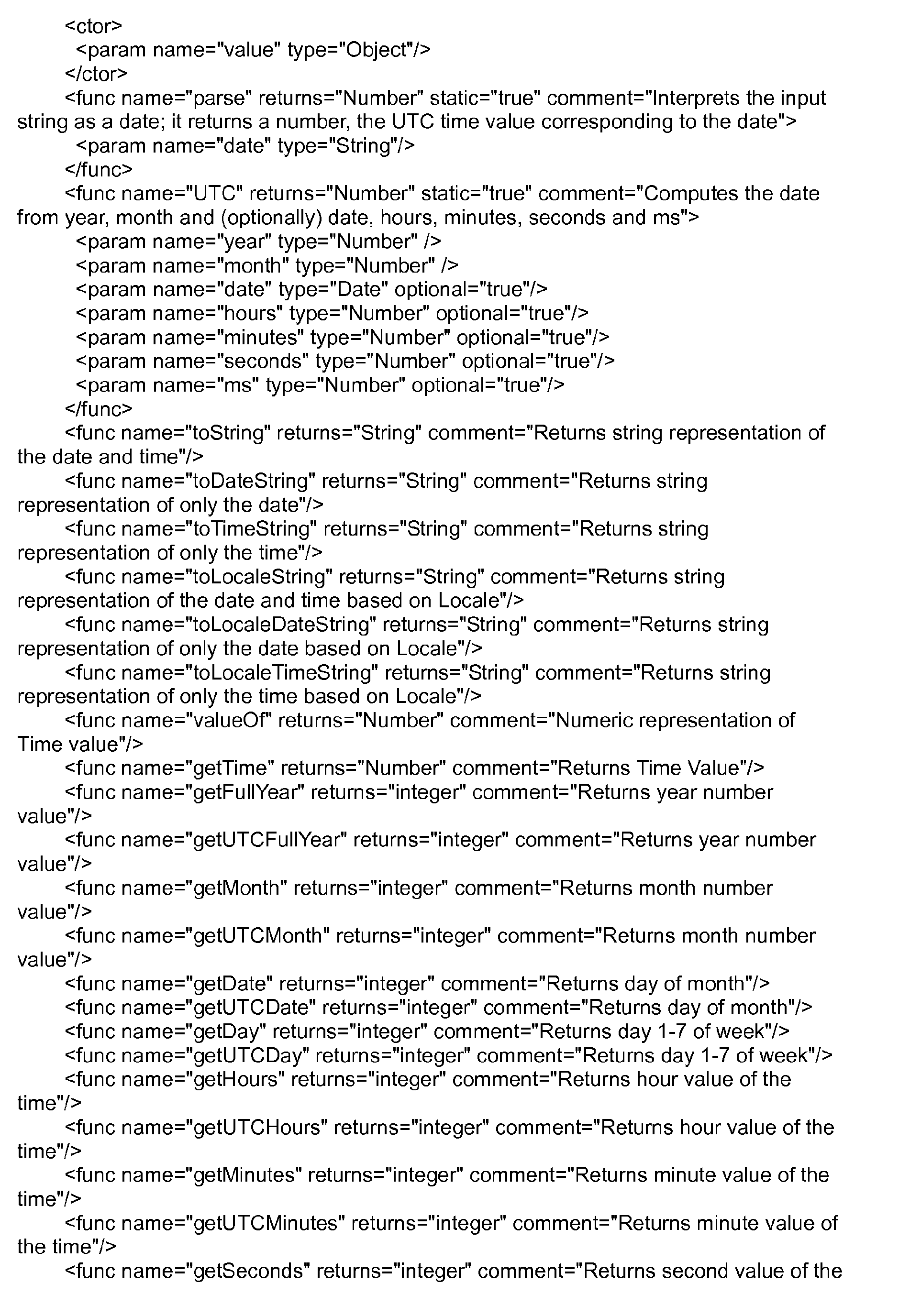

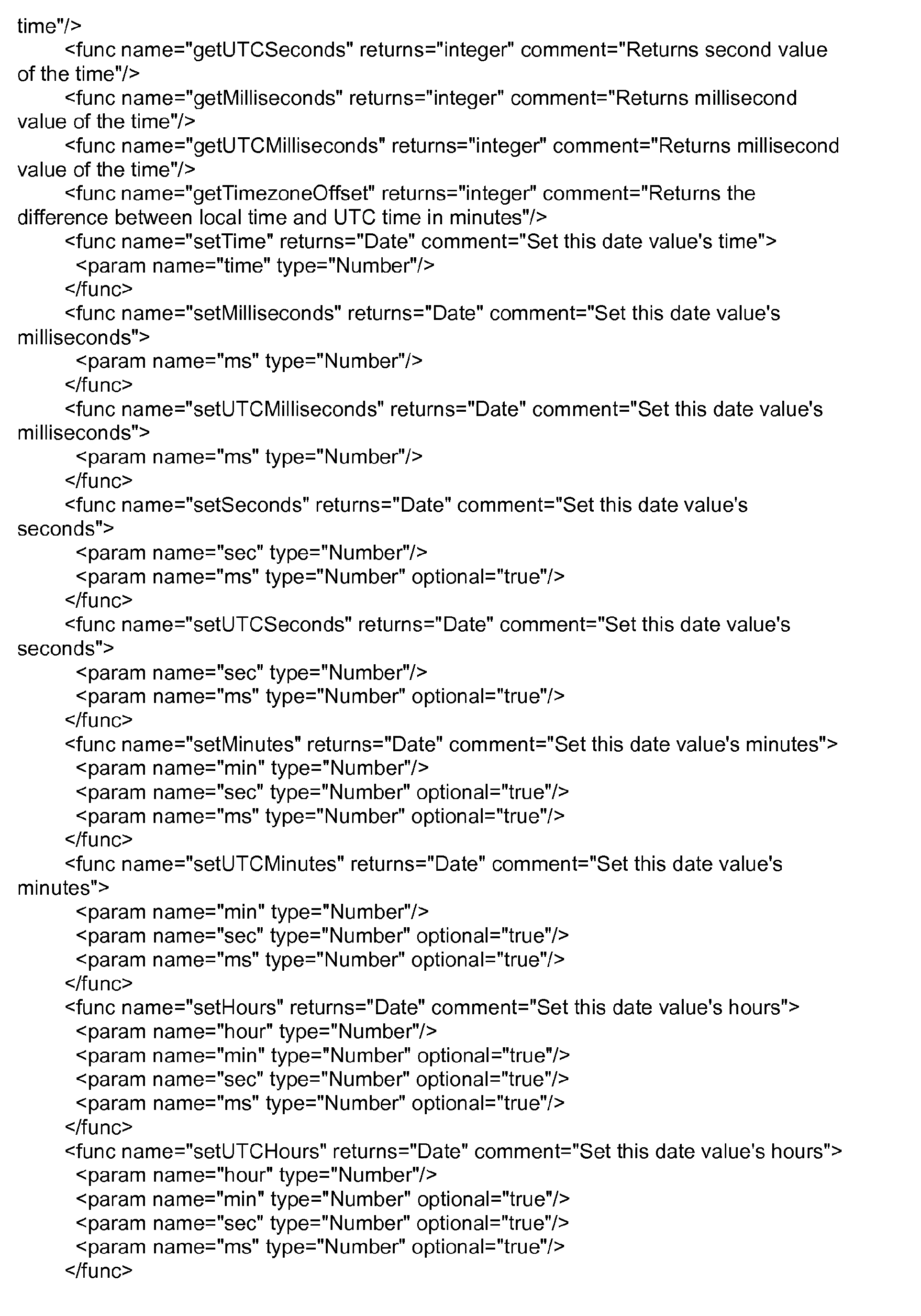

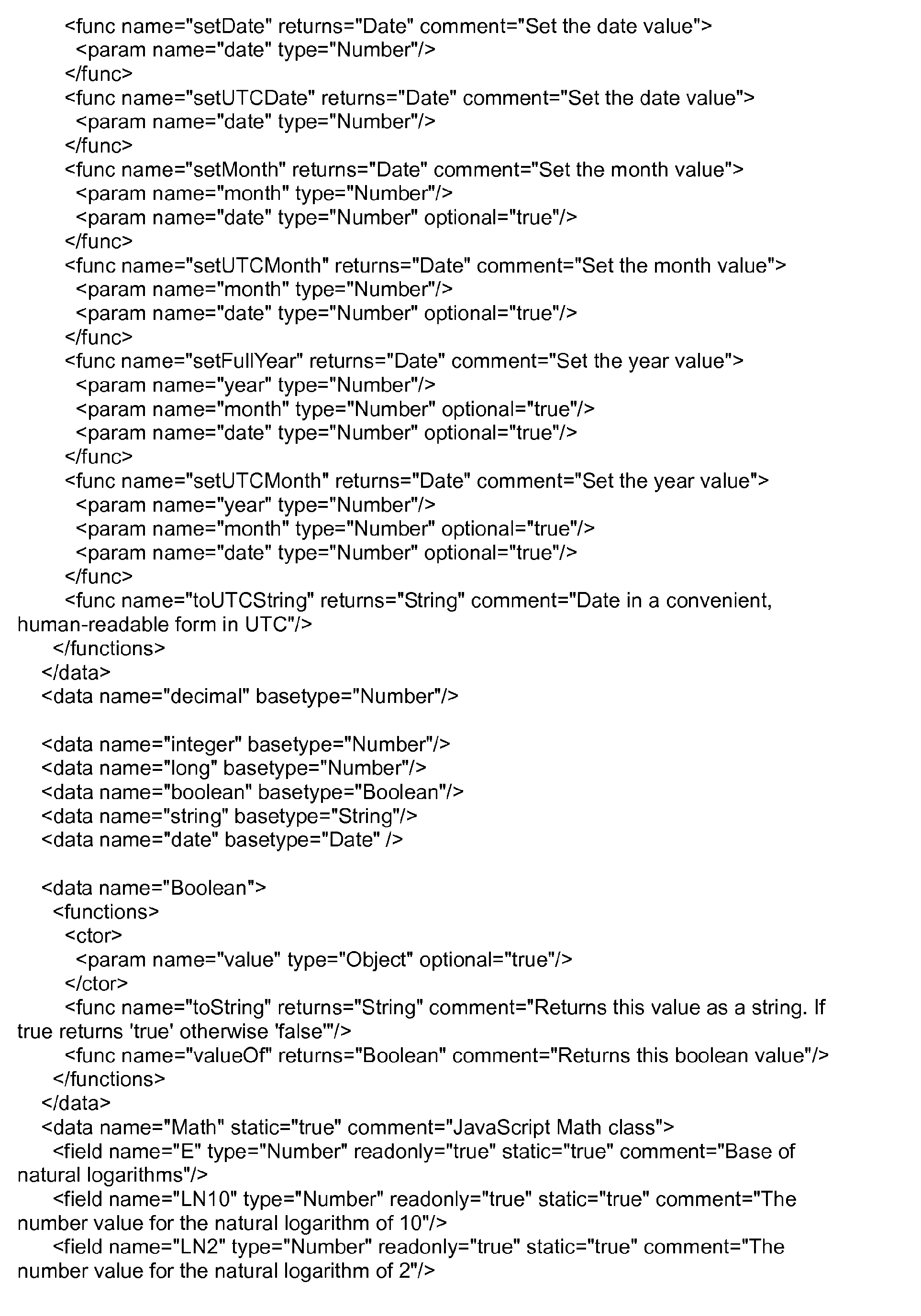

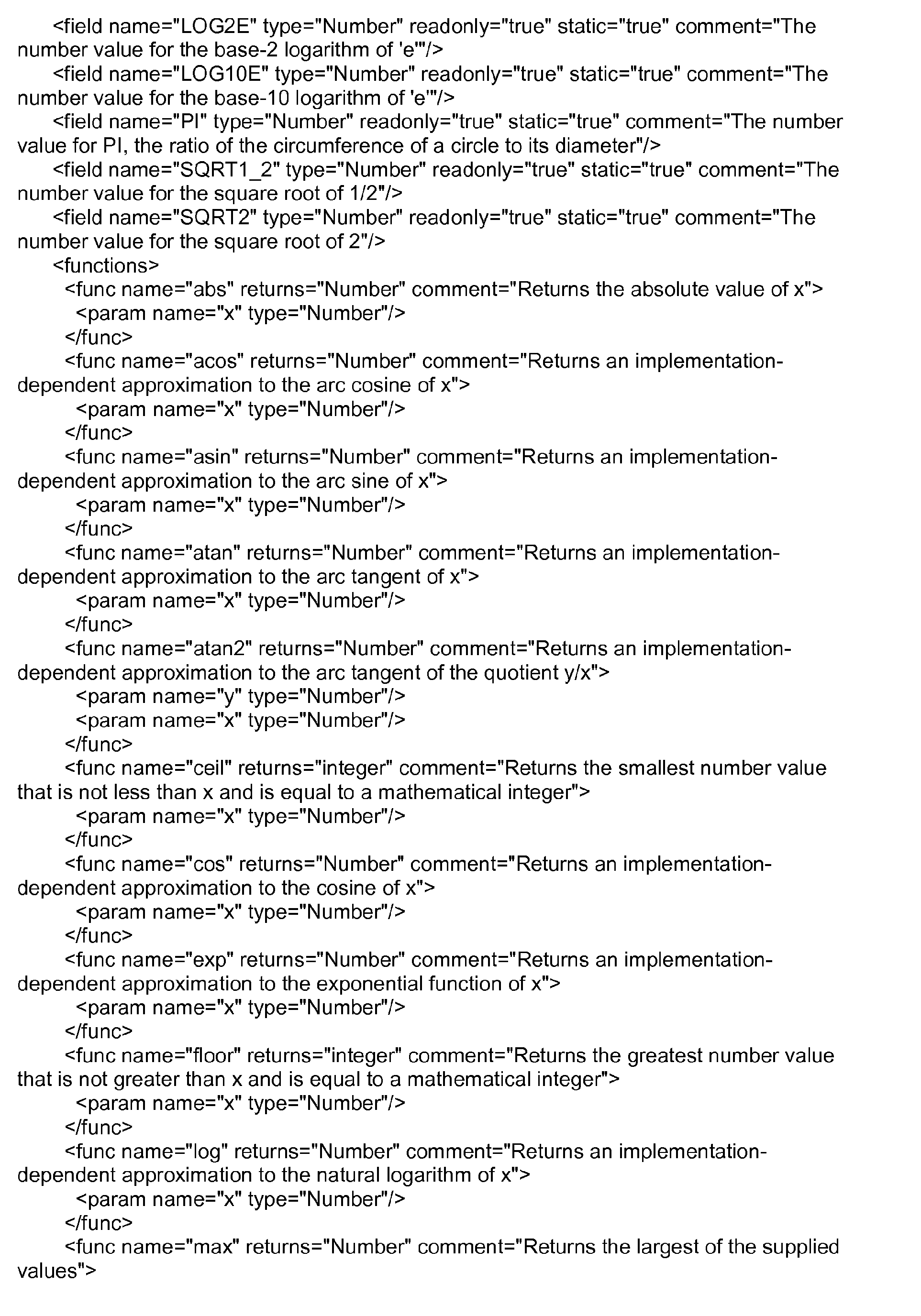

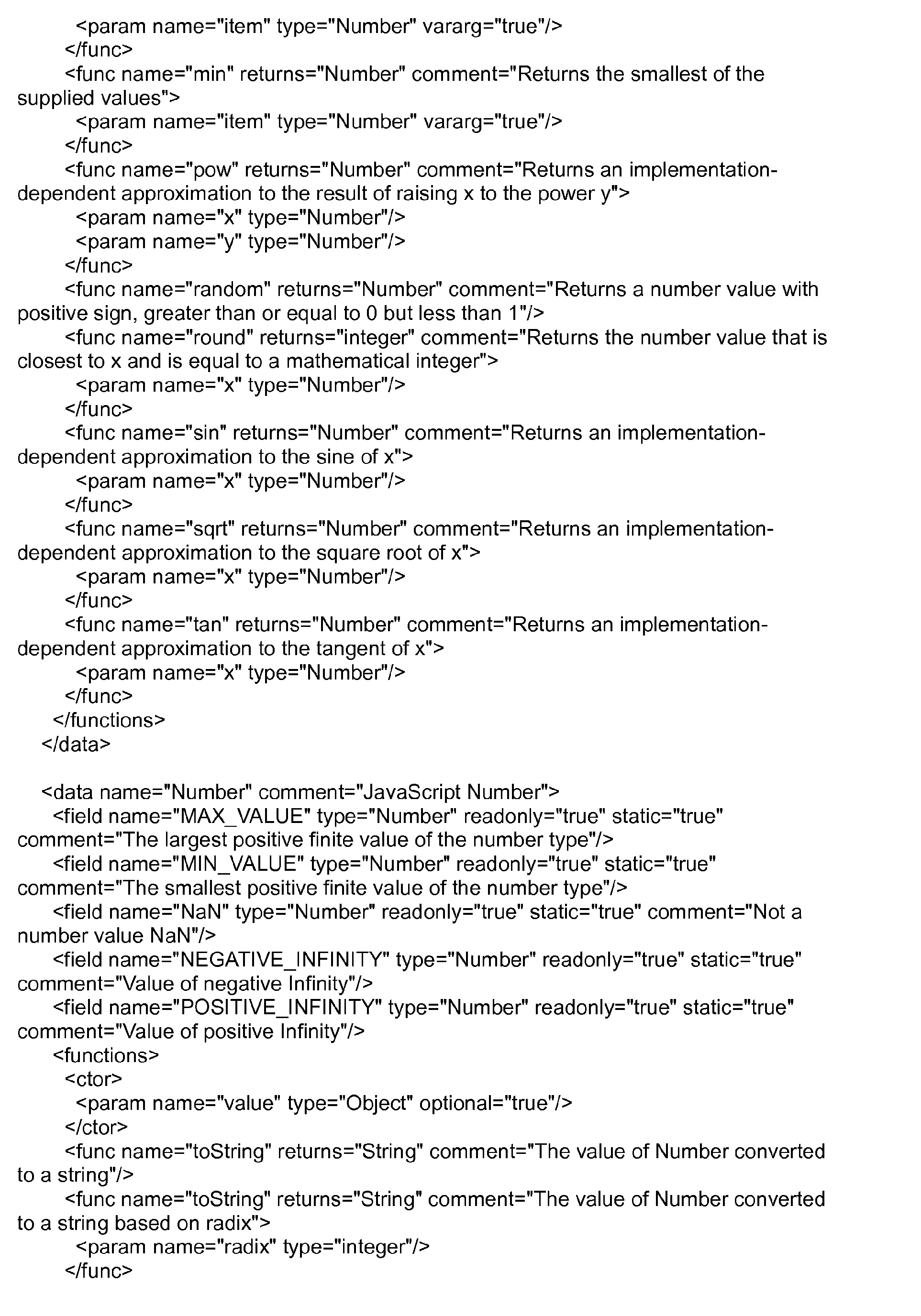

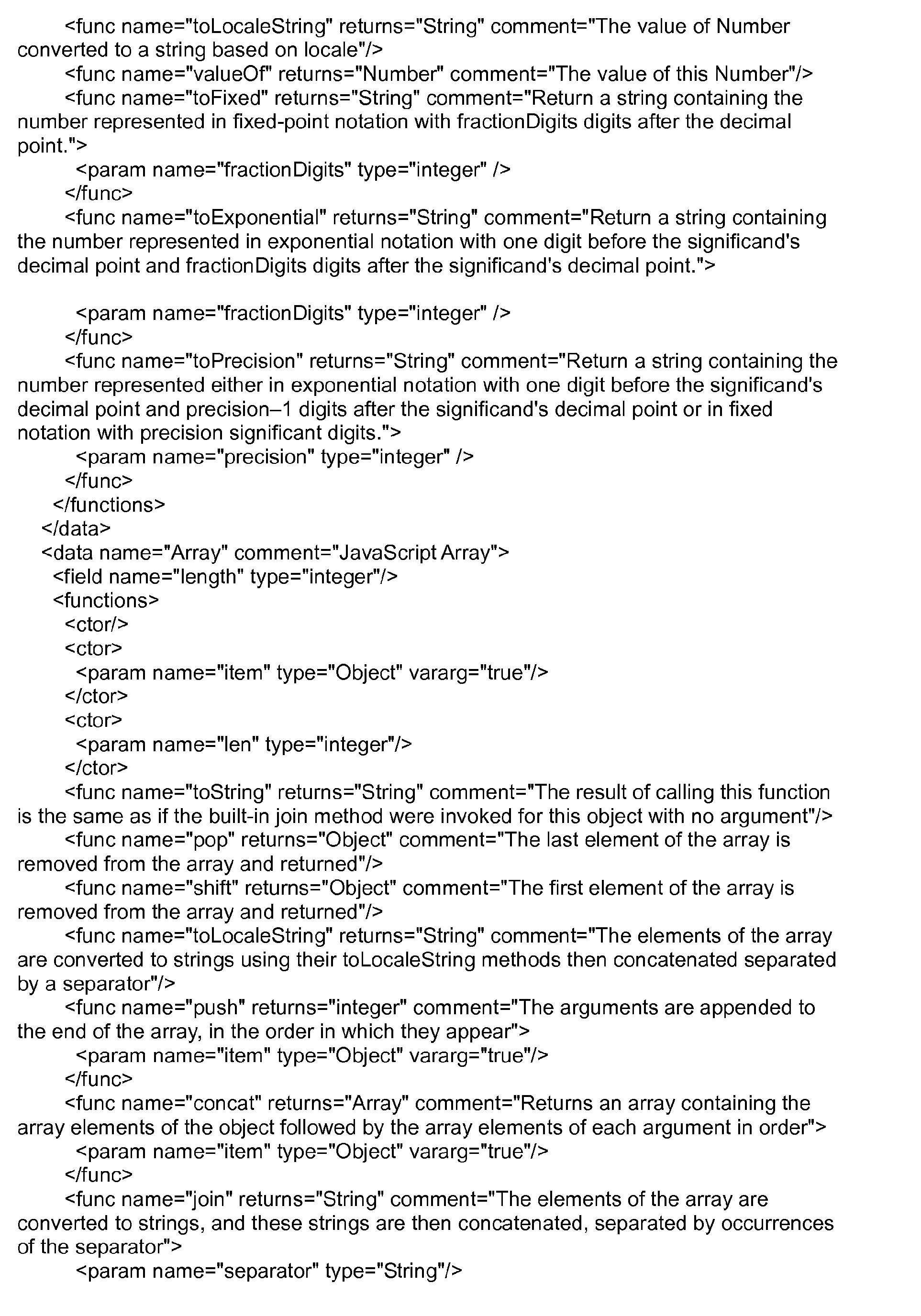

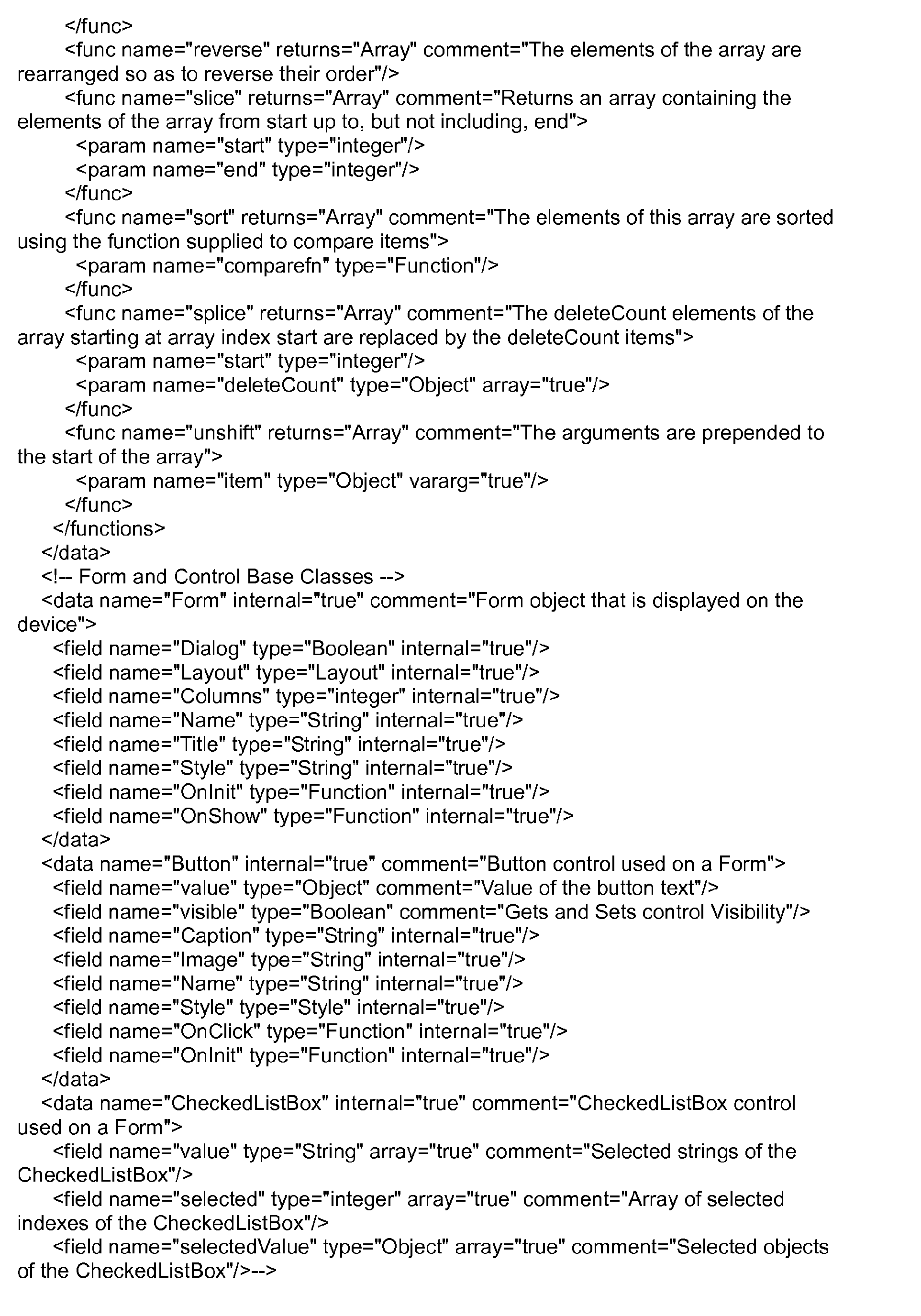

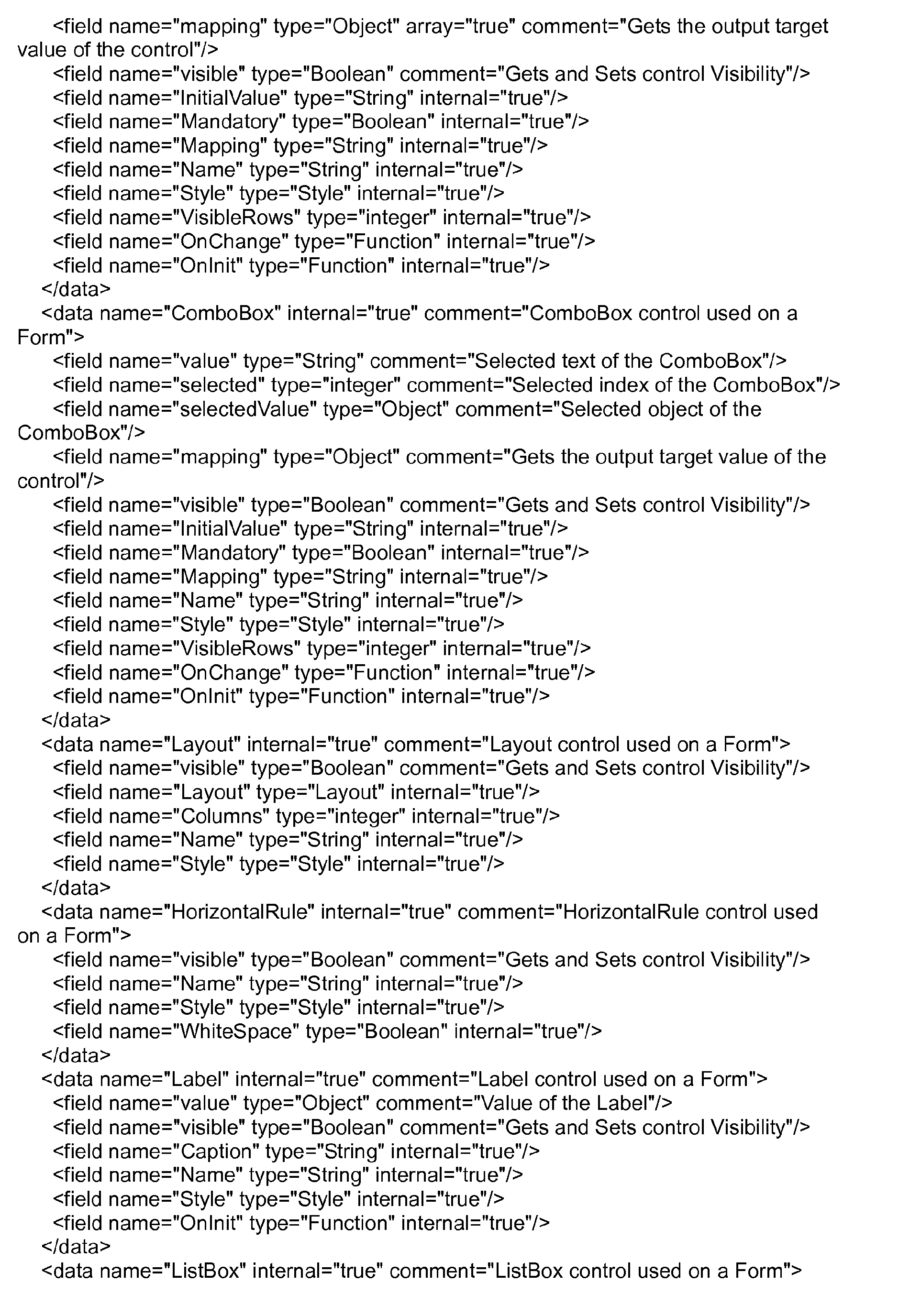

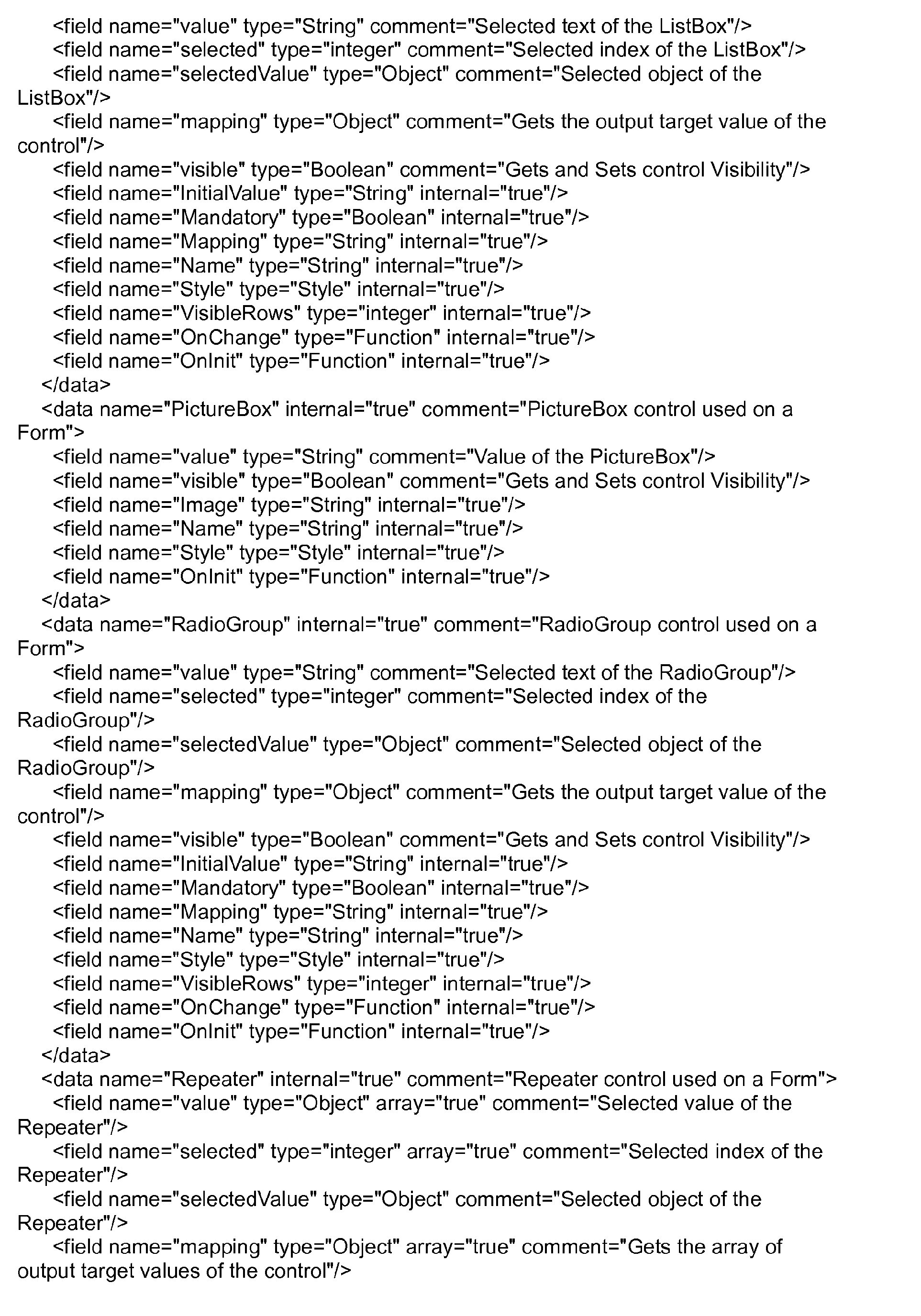

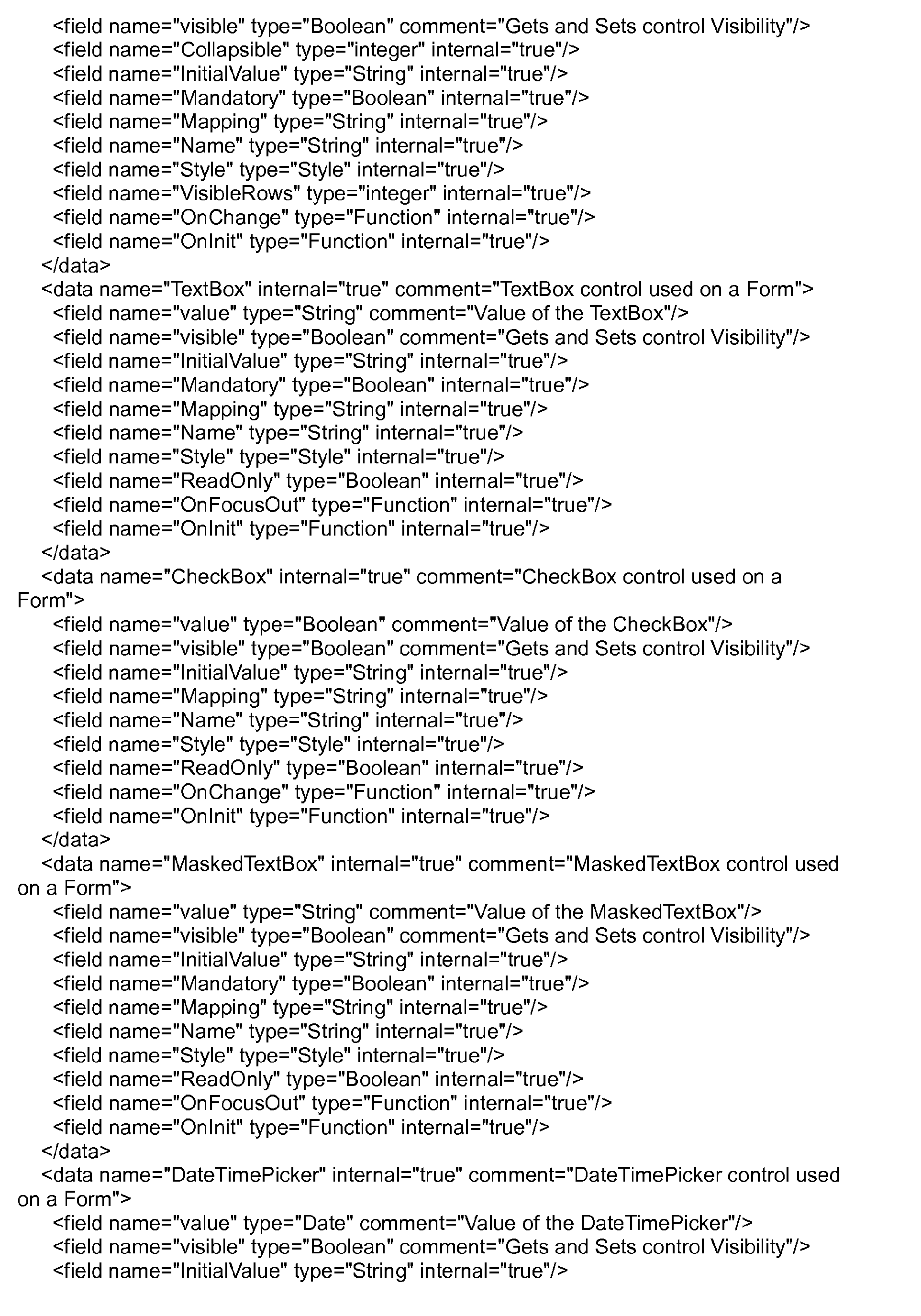

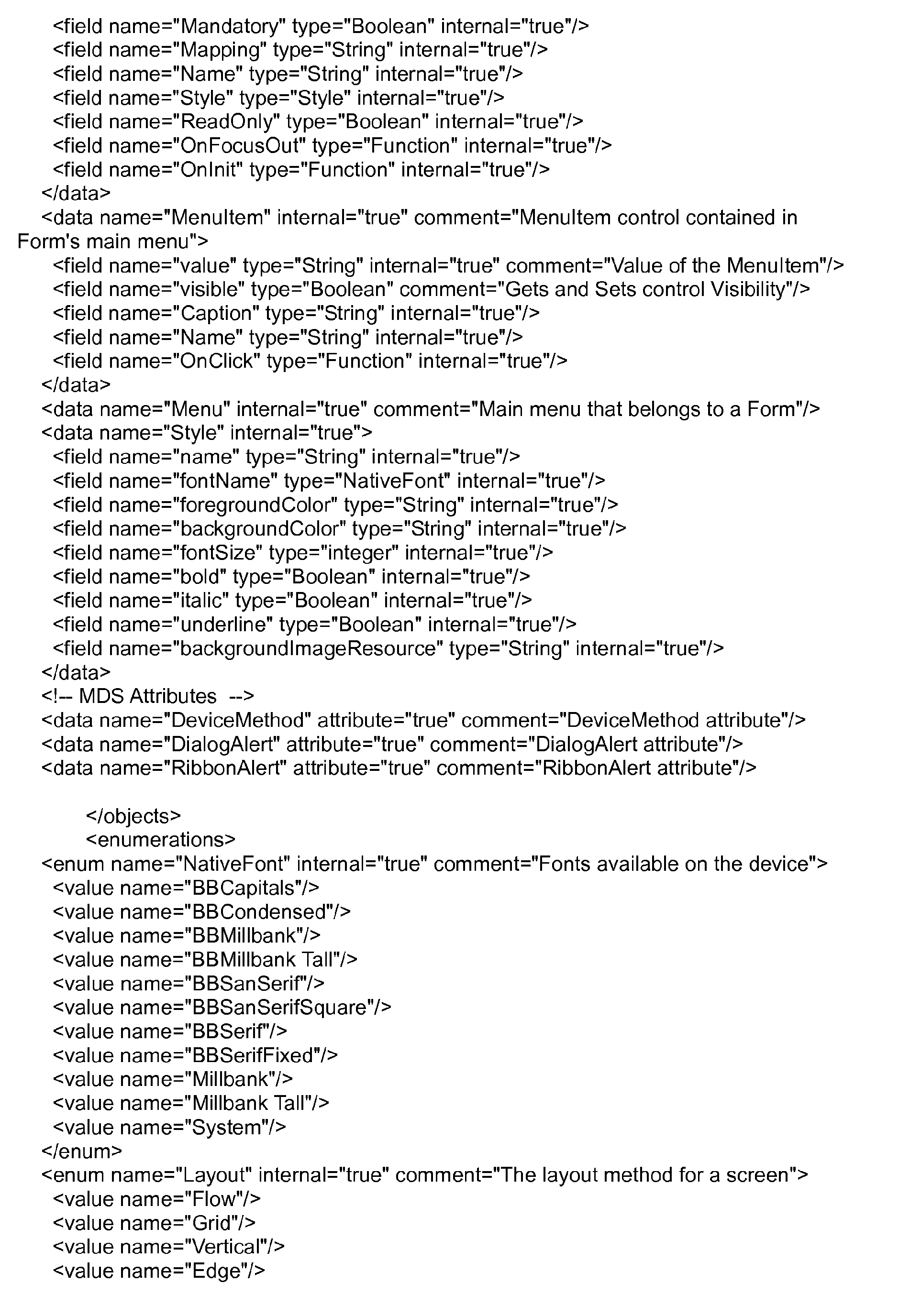

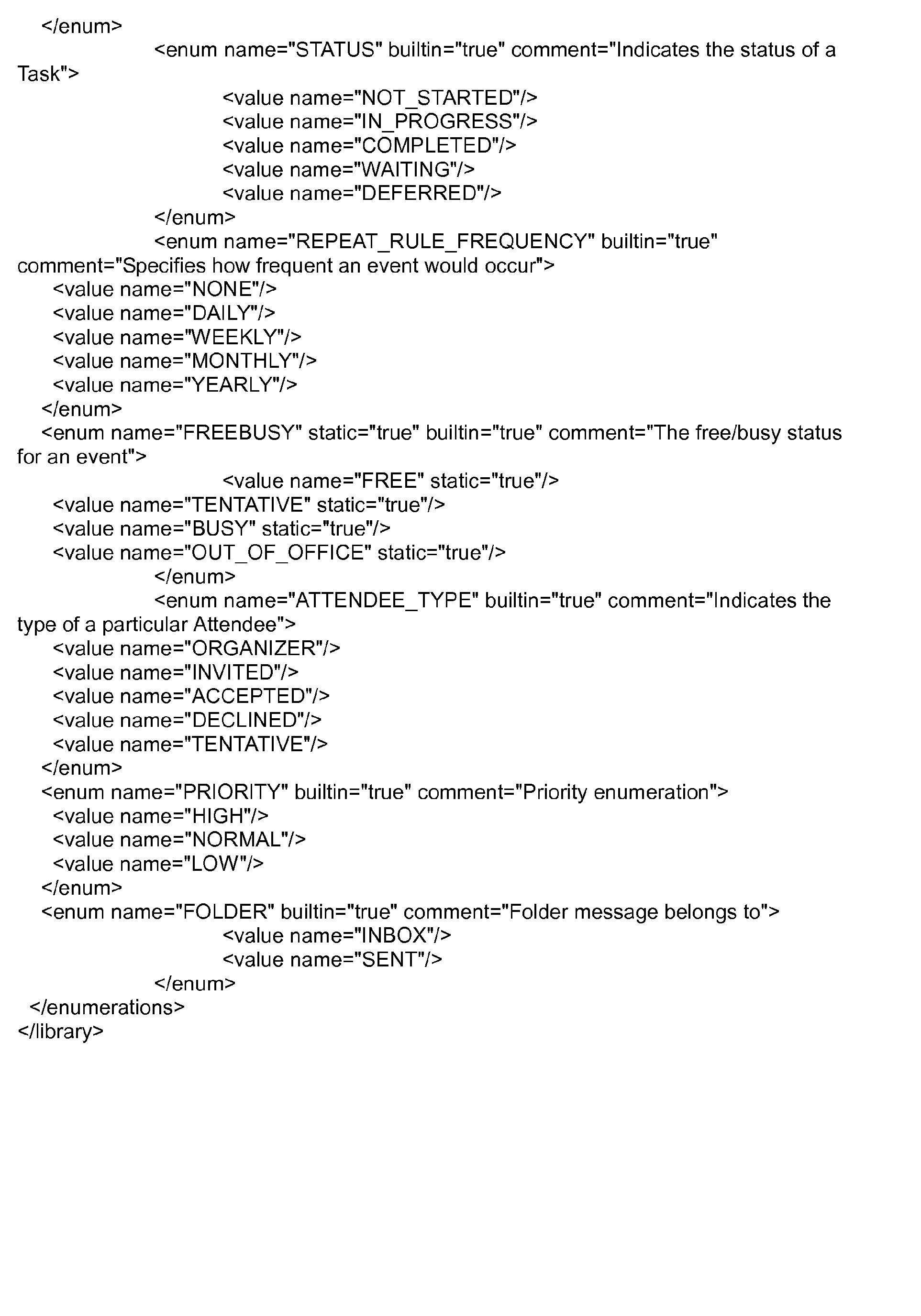

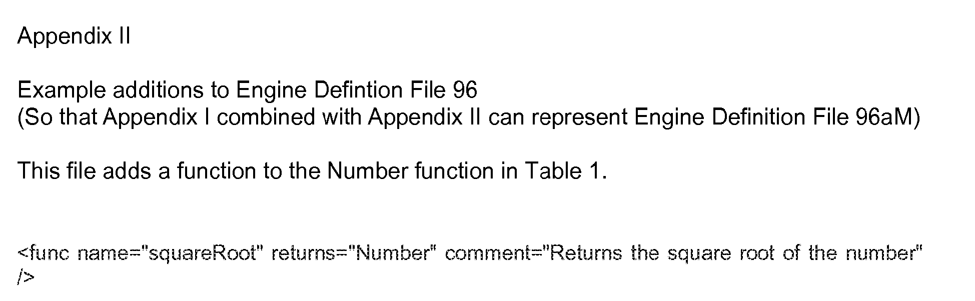

## Claims

1. An apparatus for programming a computing device comprising:
at least one central processing unit, a volatile storage unit and non-volatile storage unit interconnected by a bus;
an input peripheral for receiving input from a user and connected to the at least one central processing unit;
an output peripheral for generating output for presentation to a user and connected to the at least one central processing unit;
the at least one processing unit configured to execute a plurality of programming instructions implementing a source code editor coupled with a code development engine; the programming instructions further including an engine definition file readable by the code development engine; the engine definition file defining a plurality of tools for code development within the source code editor that correspond to a programming language used for developing software for the computing device.

2. The apparatus of claim 1 wherein the programming instructions are implemented as part of an integrated development environment.

3. The apparatus of claim 1 or claim 2 wherein the tools include one or more of a code completion tool, a code correction tool and a context-sensitive help tool.

4. The apparatus of any one of claims 1- 3 wherein the engine definition file is based on the extended Markup Language ("XML").

5. The apparatus of one of claims 1 - 4 wherein the programming language is Java and the engine definition file includes Java development tools.

6. A method of developing software for a computing device comprising:
accessing input received from an input peripheral;
accessing a definition file defining a plurality of tools for code development;
providing a development assistance tool on an output peripheral based on conditions and instructions in the definition file that match the input.

7. The method of claim 6 wherein the input is received via an editor.

8. The method of claim 6 or claim 7 wherein the accessing is performed by a development assistant engine.

9. The method of any one of claims 6-8 wherein the tool is one of a code completion tool, a code correction tool and a context-sensitive help tool.

10. The method of any one of claims 6-9 wherein the engine definition file is based on the eXtended Markup Language. ("XML")

11. The method of any one of claims 6-10 wherein the programming language is Java and said engine definition file includes Java development tools.

12. A method of modifying an integrated development engine (IDE) for programming a computing device comprising:
receiving an engine definition file corresponding to a development assistance engine incorporated into the IDE;
editing the engine definition file to include programming tools that correspond with a computer language that is native to the computing device;
saving said edited engine define file for subsequent use by said IDE.

13. The method of claim 12 wherein the tool is one of a code completion tool, a code correction tool and a context-sensitive help tool.

14. The method of claim 12 or claim 13 wherein the engine definition file is based on the eXtended Markup Language. ("XML")

15. The method of any one of claims 12-14 wherein the programming language is Java and the engine definition file includes Java development tools.

16. Computer readable media comprising instructions that, when executed by a processor of a computing system adapt the system to perform all of the steps of any of claims 6-15.
